# EUROPEAN PATENT SPECIFICATION

(11) **EP 4 555 021 B1**
(45) Date of publication and mention of the grant of the patent: **13.05.2026**
(21) Application number: 23736397.3
(22) Date of filing: 05.07.2023
(51) Int. Cl.: C09D 5/00, C09D 7/40, C01G 23/053, C08K 3/22, C01G 23/047, C09D 7/61

(54) **UV-CURABLE COATINGS HAVING HIGH REFRACTIVE INDEX**
UV-HÄRTBARE BESCHICHTUNGEN MIT HOHEM BRECHUNGSINDEX
REVÊTEMENTS DURCIS AUX UV AYANT UN INDICE DE RÉFRACTION ÉLEVÉ

(30) Priority: 11.07.2022 EP 22184213
(43) Date of publication of application: 21.05.2025
(73) Proprietor: BASF SE, 67056 Ludwigshafen am Rhein (DE)
(72) Inventor: GRIGORENKO, Nikolay A, 4057 Basel (CH); OSWALD, Andre, 4133 Muttenz (CH)
(74) Representative: BASF IP Association
(86) International application number: PCT/EP2023/068623
(87) International publication number: WO 2024/012962

(56) References cited:
- US-A1- 2018 244 915
- US-A1- 2020 062 927

## Description

The present invention relates to coating compositions, comprising i) single or mixed metal oxide nanoparticles, wherein the volume average diameter (Dᵥ50) of the metal oxide nanoparticles is in the range of 1 to 20 nm; ii) one or more monomers having at least three thiol groups (-SH) at the terminal end (the first monomer), and
iii) optional one or more monomers having at least two functional groups at the terminal end being capable of reacting with the thiol groups and a spacer group between the at least two functional groups (the second monomer),
iv) one, or more solvents; coatings obtained therefrom and the use of the compositions for coating surface relief micro- and nanostructures (e.g. holograms), manufacturing of optical waveguides, solar panels, light outcoupling layers for display and lighting devices and anti-reflection coatings. Coatings obtained from the coating composition have a high refractive index and holograms are bright and visible from any angle, when the coating compositions are applied to them.

### TECHNICAL BACKGROUND

JP2020029542A (US2020/062927) relates to an organic-inorganic composite composition comprising a polymer (A) having a triazine ring structure in a polymer main chain structure; inorganic fine particles (B); and a surface treatment agent having a predetermined triazine ring structure 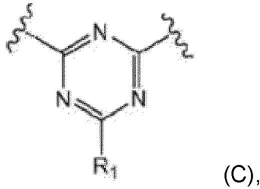 where the inorganic fine particles (B) have a number-based median size (Dₙ₅₀) of 1 nm or more and 20 nm or less, and R₁ is carboxy, phosphato, sulfo, or alkyl, alkenyl, alkynyl, aryl, aralkyl, or amino (all optionally substituted); a molded product and an optical component comprising the organic-inorganic composite composition.

US10717866B2 (US2018/0244915) relates to an organic-inorganic hybrid composition comprising a polymer (A) including a triazine ring structure represented by General Formula (1) in a polymer main chain structure: 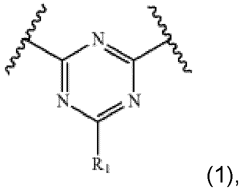 wherein, in the formula, R₁ is a substituted or unsubstituted alkyl group, aryl group, aralkyl group, amino group, arylamino group, alkylthio group, or arylthio group);
an inorganic particulate (B); and
a surface-treatment agent (C) including an acidic functional group,
wherein the polymer (A) is a thermoplastic polymer having a glass transition temperature (Tg),
a number median diameter (Dₙ₅₀) of the inorganic particulate (B) is greater than or equal to about 1 nm and less than or equal to about 20 nm; and an article and an optical component including the organic-inorganic hybrid composition.

US11312840B2 relates to an organic-inorganic hybrid composition, comprising:
a polymer having a triazine ring structure in a main chain of the polymer (A);
an inorganic particulate (B), such as, for example, zirconium oxide, a titanium oxide, a barium titanate, a strontium titanate, a zinc oxide, a gallium phosphide, a cerium oxide, a niobium oxide, or a combination thereof; and
a surface-treating agent having a triazine ring structure represented by Formula (1) (C): 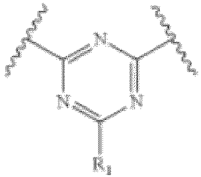
**wherein,** in Formula (1), R₁ is a carboxyl group, a phosphoric acid group, a sulfo group, or a substituted or unsubstituted alkyl group, a substituted or unsubstituted alkenyl group, a substituted or unsubstituted alkynyl group, a substituted or unsubstituted aryl group, a substituted or unsubstituted aralkyl group, or a substituted or unsubstituted amino group,
wherein a number median diameter (Dₙ₅₀) of the inorganic particulate (B) is greater than or equal to about 1 nanometer and less than or equal to about 20 nanometer, wherein " 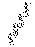 " is a linking point to an adjacent atom; an article and an optical component including the organic-inorganic hybrid composition.

US10197820B2 provides quantum dots passivated by oligomers or polymers which are formed by a reaction of a first monomer having at least three thiol groups (-SH) at the terminal end with a second monomer having at least two functional groups at the terminal end that can react with the thiol groups, and a spacer group between the at least two functional groups.

US20190338092A1 relates to flexible color filters and methods of manufacturing flexible color filters. An example flexible color filter comprises a transparent flexible substrate comprising a thermoset thiol-click polymer.

US20210403731 relates to a material composition of a light out-coupling lens for a quantum dot display panel, comprising:
trimethylolpropane tris(3-mercaptopropionate);
triethyleneglycol divinyl ether; and
an ultraviolet free-radical initiator;
wherein a molar ratio of trimethylolpropane tris(3-mercaptopropionate) to triethyleneglycol divinyl ether is 2:3, the material composition is cured by an ultraviolet light to form the light out-coupling lens, a diameter of a bottom of the light out-coupling lens ranges from 30 to 100 micrometers, and a height of the light out-coupling lens ranges from 20 to 80 micrometers.

WO2019/016136 discloses surface functionalized titanium dioxide nanoparticles treated with a) a phosphonate of formula 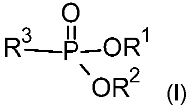 , or a mixture of phosphonates of formula (I), wherein
R¹ and R² are independently of each other hydrogen, or a C₁-C₄alkyl group,
R³ is a group CH₂=CH-, or a group of formula -[CH₂]ₙ-R⁴, wherein
n is an integer of 1 to 12,
when n > 3 one -CH₂- may be replaced by -S- with the proviso that S is not directly linked to P, or R⁴, 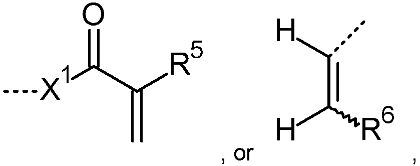
R⁴ is hydrogen, or a group of formula
R³ is hydrogen, or a C₁-C₄alkyl group,
R⁶ is hydrogen, or a C₁-C₄alkyl group,
X¹ is O, or NH, and
b) bonded with an alkoxide of formula R⁷O⁻ (**II**) and/or 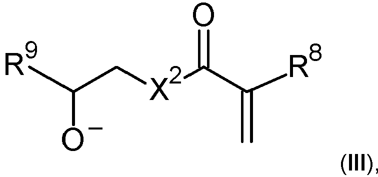 wherein
R⁷ is a C₁-C₈alkyl group, which may be interrupted one or more times by -O- and/or substituted one or more times by -OH,
R⁸ is hydrogen, or a C₁-C₄alkyl group,
R⁹ is hydrogen, -CH₂OH, -CH₂SPh, -CH₂OPh, or a group of formula R¹⁰-[CH₂OH-O-CH₂]ₙ₁-,
n1 is an integer of 1 to 5,
X² is O, or NH,
R¹⁰ is a group of formula -CH₂-X³-CH₂-C(=O)-CR¹¹=CH₂,
X³ is O, or NH, and
R¹¹ hydrogen, or a C₁-C₄alkyl group.

WO2021/052907 relates to a process for the preparation of single, or mixed metal oxide nanoparticles comprising the following steps:
a) preparing a mixture, comprising a metal oxide precursor compound(s), a solvent, a tertiary alcohol, or a secondary alcohol, wherein the tertiary alcohol and secondary alcohol eliminate water upon heating the mixture to a temperature of above 60°C, or mixtures, containing the tertiary alcohol(s) and/or the secondary alcohol(s) and optionally water,
b) heating the mixture to a temperature of above 60°C,
c) treating the obtained nanoparticles with a base, especially a base which is selected from the group consisting of alkali metal alkoxides, alkali metal hydroxides, alkali metal salts of carboxylic acids, tetraalkylammonium hydroxides, trialkylbenzylammonium hydroxides and combinations thereof, wherein

the metal oxide precursor compound(s) is selected from the group consisting of metal alkoxides of formula Me(OR¹²)ₓ (I), metal halides of formula Me'(Hal)_{x'} (**II**) and metal alkoxyhalides of formula Me"(Hal')ₘ(OR¹²')ₙ (III) and mixtures thereof, wherein Me, Me' and Me" are independently of each other titanium, tin, tantalum, niobium, hafnium, or zirconium;
x represents the valence of the metal and is either 4 or 5,
x' represents the valence of the metal and is either 4 or 5;
R¹² and R^{12'} are independently of each other a C₁-C₈alkyl group;
Hal and Hal' are independently of each other CI, Br or I;
m is an integer of 1 to 4;
n is an integer of 1 to 4;
m+n represents the valence of the metal and is either 4 or 5;
the solvent comprises at least one ether group and is different from the tertiary alcohol and the secondary alcohol;
the ratio of the sum of moles of hydroxy groups of tertiary alcohol(s) and secondary alcohol(s) to total moles of Me, Me' and Me" is in the range 1:2 to 6:1.

PCT/EP2021/072873 (WO2022/038161) relates to coating compositions, comprising i) single or mixed metal oxide nanoparticles, wherein the volume average diameter (Dᵥ50) of the metal oxide nanoparticles is in the range of 1 to 20 nm; the nanoparticles comprise at least one volatile surface-modifying compound selected from alcohols, β-diketones, carboxylic acids and β-ketoesters and mixtures thereof, wherein the total amount of volatile surface-modifying compounds is at least 5 % by weight, preferably at least 10 % by weight based on the amount of metal oxide nanoparticles, and ii) a solvent, coatings obtained therefrom and the use of the comositions for coating surface relief micro- and nanostructures (e.g. holograms), manufacturing of optical waveguides, solar panels, light outcoupling layers for display and lighting devices and anti-reflection coatings. Coatings obtained from the coating composition have a high refractive index and holograms are bright and visible from any angle, when the coating compositions are applied to them.

EP22159029.2 relates to compositions, comprising
(A) titanium dioxide nanoparticles,
(A1) which have volume average diameter (Dv50) in the range of from 1 to 10 nm, preferably 1 to 8 nm, more preferably 2 to 6 nm;
(A2) which are modified with peroxo groups, and
(A2) which optionally comprise surface modifying agents selected from the group consisting of phosphates, phosphonates, beta-diketones, tertiary amines, carboxylic acids and silanes, or combinations thereof; and
(B) one, or more reactive (radically polymerizable) diluents, with the proviso that the composition comprises a reactive diluent having at least 2 ethylenically unsaturated groups in the molecule; and
(C) an organic solvent, and the use of the compositions for coating surface relief micro- and nanostructures (e.g. holograms), manufacturing of optical waveguides, solar panels, light outcoupling layers for display and lighting devices and anti-reflection coatings.

There is a long-standing market need for transparent and colorless printable materials with high refractive index (HRI). Although, solutions for thin layers (up to 100 nm) of HRI-materials are known, the thick layers remain an unaddressed challenge, either from cost or performance point of view.

Hence, it is the object of the present invention to provide compositions, suitable for manufacturing of coatings with high refractive index, excellent chemical and mechanical stability as well as excellent light fastness.

It is an additional object of present invention to provide modified titanium dioxide nanoparticles and compositions, comprising them, which allow good curability (crosslinking of monomers) in thick layers with relatively low UV-dose and which result in coatings having excellent chemical and mechanical stability as well as excellent light fastness.

It is an additional object of present invention to provide compositions, suitable for manufacturing crosslinkable coatings with high refractive index and relatively high thickness.

It is an additional object of present invention to provide compositions, suitable for manufacturing of relatively thin coatings with high refractive index, good chemical, mechanical and light fastness.

A "cross-linked coating" means a three-dimensional network of polymer molecules, formed upon curing from monomers, and metal oxide particles, embedded in it.

### SUMMARY OF THE INVENTION

Accordingly, the present invention relates to coating compositions, comprising
i) single or mixed metal oxide nanoparticles, wherein the volume average diameter (Dᵥ50) of the metal oxide nanoparticles is in the range of 1 to 20 nm,
ii) one or more monomers having at least three thiol groups (-SH) at the terminal end (the first monomer),
iii) optional one or more monomers having at least two functional groups at the terminal end being capable of reacting with the thiol groups and a spacer group between the at least two functional groups (the second monomer),
iv) one, or more solvents. The coating composition is especially a UV-Vis curable coating composition.

Compared to the particles, described in prior art, the coating compositions of the present invention allow obtaining transparent cross-linked, chemically and mechanically resistant coatings with high refractive index and thickness and light fastness.

The coating compositions of the present invention may be used for coating diffractive optical elements (DOEs), holograms, manufacturing of optical waveguides and solar panels, light outcoupling layers for display and lighting devices, high dielectric constant (high-k) gate oxides and interlayer high-k dielectrics, anti-reflection coatings, etch and CMP stop layers, optical thin film filters, optical diffractive gratings and hybrid thin film diffractive grating structures, high refractive index abrasion-resistant coatings, in protection and sealing (OLED), or organic solar cells.

The term "security document" refers to a document which is usually protected against counterfeit or fraud by at least one security feature. Examples of security documents include without limitation value documents and value commercial goods.

The term "UV-Vis curable" and "UV-Vis curing" refers to radiation-curing under the influence of an irradiation having wavelength components in the UV or in the UV and visible part of the electromagnetic spectrum (typically 100 nm to 800 nm, preferably between 150 and 600 nm and more preferably between 200 and 400 nm). The coating after irradiation possesses higher mechanical and/or chemical stability, as compared to non-irradiated coating.

### DETAILED DESCRIPTION OF THE INVENTION

The coating composition of the present invention comprises
i) preferably 3 to 50 % by weight of the single or mixed metal oxide nanoparticles,
ii) preferably 0.15 to 10 % by weight of the one or more monomers having a triazine ring and at least three thiol groups (-SH) at the terminal end (the first monomer),
iii) preferably 0 to 30 % by weight of the one or more monomers having at least two functional groups at the terminal end being capable of reacting with the thiol groups and a spacer group between the at least two functional groups (the second monomer), and
iv) preferably 20 to 96.9 % by weight of the one, or more solvents; based on total weight of component(s) i), ii), iii) and iv).

In a preferred embodiment, the coating composition of the present invention does not comprise the second monomer iii); i.e. essentially consists of
i) single or mixed metal oxide nanoparticles, wherein the volume average diameter (Dᵥ50) of the metal oxide nanoparticles is in the range of 1 to 20 nm; and
ii) one or more monomers having at least three thiol groups (-SH) at the terminal end (the first monomer), and
iv) one, or more solvents. The coating composition is especially a UV-Vis curable coating composition.

Said coating composition is especially suitable for providing ("thin") coatings having a thickness of from 0.01 to 0.50 micrometer, preferably 0.02 to 0.40 micrometer, more preferably 0.03 to 0.30 micrometer, most preferably 0.04 to 0.25 micrometer after drying and UV curing.

In said embodiment the coating composition of the present invention comprises
i) preferably 3.0 to 20.0 % by weight, more preferably 4.0 to 10.0 % by weight of the single or mixed metal oxide nanoparticles,
ii) preferably 0.1 to 3.0 % by weight, more preferably 0.15 to 2.0 % by weight of the one or more monomers having a triazine ring and at least three thiol groups (-SH) at the terminal end (the first monomer), and
iv) preferably 77.0 to 96.9 % by weight, more preferably 88.0 to 95.85 of the one, or more solvents; based on total weight of component(s) i), ii), iii) and iv).

In another preferred embodiment the coating composition of the present invention comprises
i) single or mixed metal oxide nanoparticles, wherein the volume average diameter (Dᵥ50) of the metal oxide nanoparticles is in the range of 1 to 20 nm; and
ii) one or more monomers having at least three thiol groups (-SH) at the terminal end (the first monomer),
iii) one or more monomers having at least two functional groups at the terminal end being capable of reacting with the thiol groups and a spacer group between the at least two functional groups (the second monomer),
iv) one, or more solvents. The coating composition is especially a UV-Vis curable coating composition.

Said coating composition is especially suitable for providing ("thick") coatings having a thickness of from 0.10 to 30.0 micrometer, preferably 0.20 to 20.0 micrometer, more preferably 0.30 to 10 micrometer, most preferably 0.50 to 6.0 micrometer after drying and UV curing.

In said embodiment the coating composition of the present invention comprises
i) preferably 5.0 to 50.0 % by weight, more preferably 5.0 to 45.0% by weight of the single or mixed metal oxide nanoparticles,
ii) preferably 0.25 to 10.0 % by weight, more preferably 0.30 to 8.0 % by weight of the one or more monomers having a triazine ring and at least three thiol groups (-SH) at the terminal end (the first monomer),
iii) preferably 0.25 to 30.0 % by weight, more preferably 0.3 to 22.0 % by weight of the one or more monomers having at least two functional groups at the terminal end being capable of reacting with the thiol groups and a spacer group between the at least two functional groups (the second monomer), and
iv) preferably 20.0 to 94.5 % by weight, more preferably, 25 to 94.4 of the one, or more solvents; based on total weight of component(s) i), ii), iii) and iv).

In addition, the coating composition of the present invention may comprise, adhesion promoters, surfactants, levelling agents and polymeric binders.

### Single or mixed metal oxide nanoparticles (component i))

The single or mixed metal oxide nanoparticles are preferably titanium dioxide nanoparticles, which have a volume average diameter (Dᵥ50) in the range of 1 to 10 nm, preferably 1 to 5 nm.

In a particularly preferred embodiment, the single or mixed metal oxide nanoparticles are titanium dioxide nanoparticles, which comprise at least one volatile surface-modifying compound selected from ethanol and acetylacetone and mixtures thereof, wherein the total amount of volatile surface-modifying compounds is in the range of from 10 to 50 % by weight, especially from 10 to 40 % by weight, very especially from 15 to 35 % by weight based on the amount of metal oxide nanoparticles. Reference is made to WO2022/038161.

A process for the preparation of the composition of single, or mixed metal oxide nanoparticles may comprise the following steps:
a) preparing a mixture, comprising a metal oxide precursor compound(s), an ether-alcohol solvent, water and HCl,
b1) heating the reaction mixture to a temperature of 70 to 120°C;
b2) separating the obtained metal oxide nanoparticles from the mixture;
b3) resuspending the metal oxide nanoparticles in an alcohol, or in a mixture of alcohols, or in a mixture of alcohols and ketones;
b4) optionally treating the metal oxide nanoparticles with a volatile surface-modifying compound selected from β-diketones and β-ketoesters and mixtures thereof; or salts thereof, which are preferably selected from compounds of formula Me(OR²⁰)ₓ(L)_{y} (V), or mixtures thereof, wherein
R²⁰ is a C₁-C₈ alkyl group, preferably, a C₁-C₄ alkyl group, such as, for example, methyl, ethyl, n-propyl, iso-propyl and n-butyl;
L is a group of formula 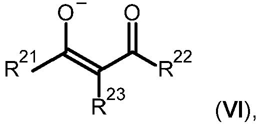
R²¹ and R²² are independently of each other a C₁-C₈alkyl group; a phenyl group, which may optionally be substituted by one or more C₁-C₄alkyl groups, or C₁-C₄alkoxy groups; a C₂-C₅heteroaryl group, which may optionally be substituted by one or more C₁-C₄alkyl groups, or C₁-C₄alkoxy groups; or a C₁-C₈alkoxy group,
R²³ is a hydrogen atom, a fluorine atom, a chlorine atom, or a C₁-C₈alkyl group, or
R²¹ and R²² together form a cyclic or bicyclic ring, which may optionally be substituted by one or more C₁-C₄alkyl groups;
Me is selected from alkali and alkali earth metals, Zn (II), In (III), Sc (III), Y (III), La (III), Ce (IV), Ti (III), Ti (IV), Zr (IV), Hf (IV), Sn (IV), V (IV), Nb (V), Ta (V), preferably Zn (II), Ti (IV), Zr (IV), Hf (IV), Sn (IV), Nb (V) and Ta (V), more preferably Ti (IV), Zr (IV), Sn (IV), Nb (V) and Ta (V),
x is in the range from 0 to 4.9, preferably 0 to 4.5, y is in the range from 0.1 to 5, preferably 0.5 to 5, and the sum x+y equals to the oxidation state of metal Me;
c1) treating the metal oxide nanoparticles with a base, especially a base which is selected from the group consisting of alkali metal alkoxides, alkali metal hydroxides, and combinations thereof, more preferably alkali metal alkoxides and combinations thereof, most preferably potassium alkoxide and combinations thereof;
c2) optionally treating the metal oxide nanoparticles with the volatile surface-modifying compound, or salts thereof; and
c3) optionally treating the TiO₂ nanoparticles with a compound of formula Me'(OR^{20'})_{z} (VII), or mixtures thereof; and
c4) filtering the mixture to obtain the dispersion of single, or mixed metal oxide nanoparticles;
wherein
R^{20'} is a C₁-C₈alkyl group, preferably a C₁-C₄ alkyl group;
Me' is selected from Zn (II), In (III), Sc (III), Y (III), La (III), Ce (IV), Ti (III), Ti (IV), Zr (IV), Hf (IV), Sn (IV), V (IV), Nb (V) and Ta (V), preferably Ti (IV), Zr (IV), Sn (IV), Nb (V) and Ta (V); and
z equals to the oxidation state of metal; wherein
the metal oxide precursor compound(s) is selected from the group consisting of metal alkoxides of formula Me(OR¹²)ₖ (I), metal halides Me'(Hal)ₗ and metal alkoxyhalides of formula Me"(Hal')ₘ(OR¹²')ₙ (**II**) and mixtures thereof, wherein
Me, Me' and Me" are independently of each other titanium, tin, tantalum, niobium, hafnium, or zirconium, especially titanium;
k represents the valence of the metal and is either 4 or 5,
l represents the valence of the metal and is either 4 or 5,
R¹² and R^{12'} are independently of each other a C₁-C₈alkyl group;
Hal and Hal' are independently from each other CI, Br or I, preferably Cl;
m is an integer of 1 to 4;
n is an integer of 1 to 4;
m+n represents the valence of the metal Me" and is either 4 or 5;
the solvent comprises at least one ether group and one alcohol group;
the ratio of moles of water to total moles of Me and Me' is in the range 2:1 to 6:1, more preferably 2.8:1 to 5:1, especially 3:1 to 4.5:1;
the ratio of total moles of Hal, Hal' and HCl to the total moles of Me, Me' and Me" is in the range 2:1 to 0.3:1, preferably 1:1 to 0.35:1, especially 0.7:1 to 0.4:1.

The total amount of volatile surface-modifying compounds is at least 5 % by weight, preferably at least 10 % by weight based on the amount of metal oxide nanoparticles.

The solvent used in step a) is preferably selected from the group consisting of 2-methoxyethanol, 2-ethoxyethanol, 2-propoxyethanol, 2-buthoxyethanol, 1-methoxy-2-propanol, 1-ethoxy-2-propanol, 1-propoxy-2-propanol, 1-buthoxy-2-propanol and mixtures thereof.

More preferably the solvent is selected from the group of 2-methoxyethanol, 2-ethoxyethanol, 2-propoxyethanol, 1-methoxy-2-propanol, 1-ethoxy-2-propanol, 1-propoxy-2-propanol and mixtures thereof.

The most preferred solvent is 1-methoxy-2-propanol.

Preferably, the mixture used in step a) comprises a metal alkoxide of formula (I).

The metal alkoxide of formula (I) is preferably a metal alkoxide of formula Me(OR¹²)₄ (la), wherein R¹² is a C₁-C₄alkyl group.

The metal halide of formula Me'(Hal)_{x'} (**II**) is preferably a metal halide of formula Me'(Hal)₄ (Ila), wherein Hal is Cl. Me' is preferably titanium.

The temperature in step b1) is preferably in the range 80 to 120°C.

The alcohol(s) R¹²OH and/or R^{12'}OH formed in step b1) may be removed from the reaction mixture by distillation. The removal of the alcohol(s) R¹²OH and/or R^{12'}OH may increase the reaction rate and/or the product quality.

Separation of the obtained metal oxide nanoparticles from the mixture in step b2) may be done, for example, by filtration, or centrifugation, preferably by filtration.

In step b3) the metal oxide nanoparticles are preferably resuspended in a C₁-C₄alcohol, such as, for example, ethanol, 1-propanol and isopropanol; or a mixture of C₁-C₄alcohols.

The base used in step c1) is preferably selected from the group consisting of alkali metal alkoxides and alkali metal hydroxides, and combinations thereof. More preferred, the base is selected from the group consisting of alkali metal alkoxides, especially potassium alkoxides. Most preferred bases are potassium methylate and potassium ethylate.

The metal oxide nanoparticles may be treated in step b4) and/or c2) with volatile surface-modifying compound(s) selected from β-diketones and β-ketoesters and mixtures thereof, especially β-diketone(s), such as, for example, acetylacetone. The treatment with volatile surface-modifying compound(s) is prefereably done in step b4).

After treatment with base aliquots of nanoparticles dispersions in ethanol mixed with water (1:2 v/v) under vigorous stirring show a pH of greater than 3.5. That implies, the obtained nanoparticles have low corrosivity.

In a particularly preferred embodiment the process for the preparation of a dispersion (coating composition) of the single, or mixed metal oxide nanoparticles is directed to the preparation a dispersion of TiO₂ nanoparticles and comprises the following steps:
a) preparing a mixture, comprising a metal alkoxide of formula Ti(OR¹²)₄ (Xa), a solvent, HCI and water, wherein R¹² is C₁-C₄alkyl, preferably methyl, ethyl, n-propyl, iso-propyl and n-butyl;
b1) heating the mixture to a temperature of from 80°C to 100 °C;
b2) separating the obtained TiO₂ nanoparticles from the mixture;
b3) resuspending the TiO₂ nanoparticles in a C₁-C₄alcohol, or a mixture of C₁-C₄alcohols;
b4) optionally treating the TiO₂ nanoparticles with a β-diketone(s), or salt(s) thereof;
c1) treating the TiO₂ nanoparticles with a base;
c2) optionally treating the TiO₂ nanoparticles with a β-diketone(s), or salt(s) thereof;
c3) optionally treating the TiO₂ nanoparticles with a compound of formula Me'(OR^{20'})_{z} (VII), or mixtures thereof; and
c4) filtering the mixture to obtain the dispersion of TiO₂ nanoparticles, wherein R^{20'} is a C₁-C₈ alkyl group, preferably a C₁-C₄ alkyl group;
Me' is selected from Zn (II), In (III), Sc (III), Y (III), La (III), Ce (IV), Ti (III), Ti (IV), Zr (IV), Hf (IV), Sn (IV), V (IV), Nb (V) and Ta (V), preferably Ti (IV), Zr (IV), Sn (IV), Nb (V) and Ta (V); and
z equals to the oxidation state of metal; wherein
the solvent comprises at least one ether group and one alcohol group;
the ratio of moles of water to total moles of Me and Me' is in the range 3:1 to 5:1, more preferably 3.2:1 to 4.5:1, especially 3.5:1 to 4.5:1;
the ratio of moles of HCl to the moles of titanium is in the range 1:1 to 0.3:1, preferably 0.8:1 to 0.35:1, especially 0.7:1 to 0.4:1.

The total amount of volatile surface-modifying compounds is at least 5 % by weight, preferably at least 10 % by weight based on the amount of metal oxide nanoparticles.

The solvent used in step a) is preferably selected from the group consisting of 2-methoxyethanol, 2-ethoxyethanol, 2-propoxyethanol, 2-buthoxyethanol, 1-methoxy-2-propanol, 1-ethoxy-2-propanol, 1-propoxy-2-propanol, 1-buthoxy-2-propanol and mixtures thereof.

More preferably the solvent is selected from the group of 2-methoxyethanol, 2-ethoxyethanol, 2-propoxyethanol, 1-methoxy-2-propanol, 1-ethoxy-2-propanol, 1-propoxy-2-propanol and mixtures thereof.

The most preferred solvent is 1-methoxy-2-propanol.

The base is selected from potassium alkoxides, or combinations thereof, preferably potassium methylate and potassium ethylate.

In said embodiment the process comprises preferably the following steps:
a) preparing a mixture, comprising a metal alkoxide of formula Ti(OR¹²)₄ (Xa), a solvent, HCI and water, wherein R¹² is C₁-C₄alkyl, preferably methyl, ethyl, n-propyl, iso-propyl and n-butyl;
b1) heating the mixture to a temperature of from 80°C to 100 °C;
b2) separating the obtained TiO₂ nanoparticles from the mixture;
b3) resuspending the TiO₂ nanoparticles in a C₁-C₄alcohol, or a mixture of C₁-C₄alcohols;
b4) treating the TiO₂ nanoparticles with a β-diketone(s), or salt(s) thereof;
c1) treating the TiO₂ nanoparticles with a base;
c4) filtering the mixture to obtain the dispersion of TiO₂ nanoparticles, wherein the solvent is 1-methoxy-2-propanol;
the ratio of moles of water to total moles of Me and Me' is in the range 3:1 to 5:1, more preferably 3.2:1 to 4.5:1, especially 3.5:1 to 4.5:1;
the ratio of moles of HCl to the moles of titanium is in the range 1:1 to 0.3:1, preferably 0.8:1 to 0.35:1, especially 0.7:1 to 0.4:1.

Separation of the obtained TiO₂ nanoparticles from the mixture in step b2) may be done, for example, by filtration, or centrifugation.

In step b3) the metal oxide nanoparticles are preferably resuspended in ethanol, 1-propanol and isopropanol; more preferably in ethanol.

The metal oxide nanoparticles can be treated in step b4) and/or c2) with β-diketone(s), such as, for example, compounds of formula H⁺L⁻, wherein L⁻ is defined below. The treatment with β-diketone(s) is preferably done in step b4). The treatment is usually carried out at a temperature of from 0°C to 120°C, preferably at a temperature of from 20°C to 100°C. The treatment is preferably carried out at normal or higher pressure, especially at normal pressure.

The base used in step c1) is preferably an alkali metal alkoxide, especially potassium alkoxide. The treatment is usually carried out at a temperature of from 0°C to 120°C, preferably from 50°C to 100°C. The treatment can be carried out at normal or higher pressure and is preferably carried out at normal pressure.

The metal oxide nanoparticles may be treated in step b4) and/or c2) with metal complex(es), comprising β-diketonate anion (L⁻). Such metal complexes are preferably compounds of formula Me(OR²⁰)ₓ(L⁻)_{y} (V), or mixtures thereof, wherein:
R²⁰ is a C₁-C₈ alkyl group, preferably a C₁-C₄ alkyl group, such as, for example, methyl, ethyl, n-propyl, iso-propyl and n-butyl;
L is a group of formula 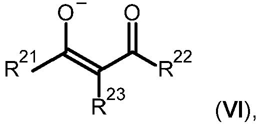
R²¹ and R²² are independently of each other a C₁-C₈alkyl group; a phenyl group, which may optionally be substituted by one or more C₁-C₄alkyl groups, or C₁-C₄alkoxy groups; a C₂-C₅heteroaryl group, which may optionally be substituted by one or more C₁-C₄alkyl groups, or C₁-C₄alkoxy groups; or a C₁-C₈alkoxy group,
R²³ is a hydrogen atom, a fluorine atom, a chlorine atom, or a C₁-C₈alkyl group, or R²¹ and R²² together form a cyclic or bicyclic ring, which may optionally be substituted by one or more C₁-C₄alkyl groups;
Me is selected from alkali and alkali earth metals, Zn (II), In (III), Sc (III), Y (III), La (III), Ce (IV), Ti (III), Ti (IV), Zr (IV), Hf (IV), Sn (IV), V (IV), Nb (V), Ta (V), preferably Zn (II), Ti (IV), Zr (IV), Hf (IV), Sn (IV), Nb (V) and Ta (V), more preferably Ti (IV), Zr (IV), Sn (IV), Nb (V) and Ta (V);
x is in the range from 0 to 4.9, preferably 0 to 4.5, y is in the range from 0.1 to 5, preferably 0.5 to 5, and the sum x+y equals to the oxidation state of metal.

The treatment is preferably carried out at a temperature of from 0°C to 120°C, especially from 20°C to 100°C. The treatment is preferably carried out at normal or higher pressure, especially at normal pressure.

The process may further comprise an optional step c3), wherein the dispersion, obtained in step c1), or in step c2) is treated with a compound of formula Me'(OR^{20'})_{z} (VII), or mixtures thereof, wherein
R^{20'} is a C₁-C₈ alkyl group, preferably a C₁-C₄ alkyl group;
Me' is selected from Zn (II), In (III), Sc (III), Y (III), La (III), Ce (IV), Ti (III), Ti (IV), Zr (IV), Hf (IV), Sn (IV), V (IV), Nb (V) and Ta (V), preferably Ti (IV), Zr (IV), Sn (IV), Nb (V) and Ta (V); and
z equals to the oxidation state of metal.

The preferred β-diketonate anions are derived by abstraction of proton from acetylacetone, 2,4-hexanedione, 2,4-heptanedione, 3,5-heptanedione, 1,3-cyclohexanedione, 1,3-cyclopentanedione, especially acetylacetone.

Preferably, the metal oxide nanoparticles are treated in step b4) and/or c2) with β-diketone(s), such as, for example, acetylacetone. The treatment with β-diketone(s) is prefereably done in step b4).

After treatment with base aliquots of nanoparticles dispersions in ethanol mixed with water (1:2 v/v) under vigorous stirring show a pH of greater than 3.5. That means, the obtained nanoparticles have low corrosivity.

The metal oxide nanoparticles, in particular titanium dioxide nanoparticles, used in the coating compositions according to the present invention are preferably obtained by the above process.

The metal oxide nanoparticles, in particular titanium dioxide nanoparticles, used in the coating compositions according to the present invention are preferably obtained by the above process.

The metal oxide, in particular titanium dioxide nanoparticles have a volume average particle size from 1 nm to 20 nm, preferably from 1 nm to 10 nm, more preferably from 1 nm to 5 nm. They can be resuspended, for example, in methanol, ethanol, propanol, 2-methoxy ethanol, iso-propanol, 2-iso-propoxy ethanol, 1-butanol, 1-methoxy-2-propanol and their mixtures with ketones, such as 2-butanone, cyclopentanone, cyclohexanone. A film of the metal oxide, in particular titanium dioxide nanoparticles, which is dried and cured with UV light, shows a refractive index of greater than 1.70 (at 589 nm), especially of greater than 1.80, very especially of greater than 1.90.

In a particularly preferred embodiment the coating composition (dispersion) according to the present invention comprises
i) titanium dioxide nanoparticles, wherein the volume average diameter (Dᵥ50) of the titanium dioxide nanoparticles is in the range of 1 to 10 nm, especially 1 to 5 nm; the nanoparticles comprise at least one volatile surface-modifying compound selected from ethanol and acetylacetone and mixtures thereof, wherein the total amount of volatile surface-modifying compounds is in the range of from 10 to 50 % by weight, especially from 10 to 40 % by weight, very especially from 15 to 35 % by weight based on the amount of metal oxide nanoparticles;
ii) a first monomer, which is a compound of formula 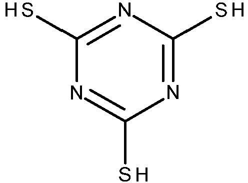 (trithiocyanuric acid);
iii) a second monomer, which is selected from bis(4-vinylthiophenyl)sulfide, bis(4-methacryloylthiophenyl)sulfide, dipropylene glycol diacrylate, tripropylene glycol diacrylate, dipropylene glycol dimethacrylate, tripropylene glycol dimethacrylate, diethylene glycol diacrylate, triethylene glycol diacrylate, diethylene glycol dimethacrylate, triethylene glycol dimethacrylate, butanediol diacrylate, butanediol dimethacrylate, hexanediol diacrylate, hexanediol dimethacrylate, octanediol diacrylate, octanediol dimethacrylate, nonanediol diacrylate, nonanediol dimethacrylate, decanediol diacrylate, decanediol dimethacrylate, cyclohexanediol diacrylate, cyclohexanediol dimethacrylate, cyclohexanedimethanol diacrylate, cyclohexanedimethanol dimethacrylate, (ethoxylated)neopentyl glycol diacrylate, (propoxylated)neopentyl glycol diacrylate, (ethoxylated)neopentyl glycol dimethacrylate, (propoxylated)neopentyl glycol dimethacrylate, trimethylolpropane triacrylate (TMPTA), trimethylolpropane trimethacrylate (TMPTMA), ethoxylated trimethylolpropane triacrylates, ethoxylated trimethylolpropane trimethacrylates, propoxylated trimethylolpropane triacrylates, propoxylated trimethylolpropane trimethacrylates, ethoxylated glycerol triacrylates, ethoxylated glycerol trimethacrylates, propoxylated glycerol triacrylates, propoxylated glycerol trimethacrylates, bistrimethylolpropane tetraacrylate, bistrimethylolpropane tetramethacrylate, ethoxylated bistrimethylolpropane tetraacrylates, propoxylated bistrimethylolpropane tetraacrylates, pentaerythritol tetraacrylate, pentaerythritol tetramethacrylate, ethoxylated pentaerythritol tetraacrylates, ethoxylated pentaerythritol tetramethacrylates, propoxylated pentaerythritol tetraacrylates, propoxylated pentaerythritol tetramethacrylates, dipentaerythritol hexaacrylate, ethoxylated dipentaerythritol hexaacrylates, propoxylated dipentaerythritol hexaacrylates and mixtures thereof; and
iv) a solvent which is selected from C₂-C₄alcohols, especially ethanol, 1-propanol and isopropanol; ketones, especially acetone, 2-butanone, 2-pentanone, 3-pentanone, cyclopentanone and cyclohexanone; ether alcohols, especially 1-methoxy-2-propanol; and mixtures thereof.

### First monomer (component ii))

The first monomer has preferably a triazine structure and three thiol groups (-SH) at the terminal end.

The first monomer is most preferred a compound of formula 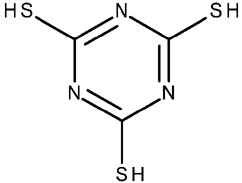 (trithiocyanuric acid).

### Second Monomer (component iii))

The second monomer having at least two functional groups at the terminal end being capable of reacting with the thiol groups and a spacer group between the at least two functional groups (the second monomer) may be a difunctional, trifunctional, tetrafunctional, pentafunctional, or hexafunctional diluent having two, three, four, five, or six unsaturated carbon-carbon bonds, especially a difunctional (meth)acrylate, a trifunctional (meth)acrylate, a tetrafunctional (meth)acrylate, a pentafunctional (meth)acrylate, or a hexafunctional (meth)acrylate.

Examples of a difunctional (meth)acrylate are bisphenol A ethoxylate diacrylate, bisphenol A glycerolate diacrylate, glycerol diacrylate, triglycerol diacrylate, poly(ethylene glycol)-block-poly(propylene glycol)-block-poly(ethylene glycol) diacrylate, tricyclo[5.2.1.0^{2,6}]decanedimethanol diacrylate, (ethoxylated) trimethylolpropane methyl ether diacrylate, (propoxylated) trimethylolpropane methyl ether diacrylate, cyclohexanediol diacrylate, cyclohexanedimethanol diacrylate, cyclohexanedimethanol diacrylate, bisphenol A ethoxylate dimethacrylate, bisphenol A glycerolate dimethacrylate, glycerol dimethacrylate, triglycerol dimethacrylate, poly(ethylene glycol)-block-poly(propylene glycol)-block-poly(ethylene glycol) dimethacrylate, tricyclo[5.2.1.0^{2,6}]decanedimethanol dimethacrylate, (ethoxylated) trimethylolpropane methyl ether dimethacrylate, (propoxylated) trimethylolpropane methyl ether dimethacrylate, cyclohexanediol dimethacrylate and cyclohexanedimethanol dimethacrylate.

The difunctional (meth)acrylate is preferably a compound of formula 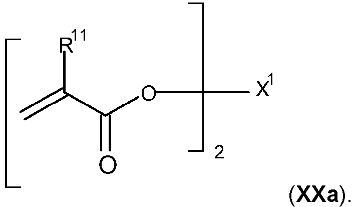
R¹¹ is independently in each occurrence H, or a methyl group;
X¹ is a group of formula 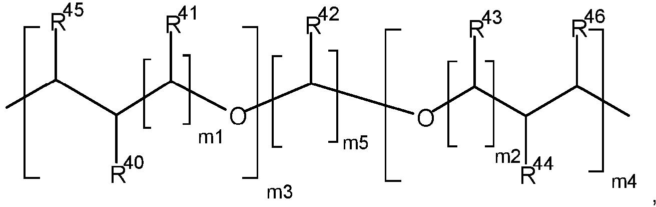 or 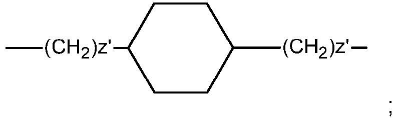
wherein
m1 is 0, or 1; m2 is 0, or 1;
m3 is 0, or an integer of 1 to 10; m4 is 0, or an integer of 1 to 10;
m5 is 0, an integer 1 to 8;
z' is 0, or 1;
R⁴² is independently in each occurrence H, or a C₁-C₄alkyl group;
R⁴⁰, R⁴¹, R⁴³, R⁴⁴, R⁴⁵ and R⁴⁶ are independently of each other H, or a C₁-C₄alkyl group.

Examples of difunctional (meth)acrylates of formula (XXa) are propylene glycol diacrylate, dipropylene glycol diacrylate, tripropylene glycol diacrylate, tetrapropylene glycol diacrylate, ethylene glycol diacrylate, diethylene glycol diacrylate, triethylene glycol diacrylate, tetraethylene glycol diacrylate, 1,3-propanediol diacrylate, 1,2-butanediol diacrylate, 1,3-butanediol diacrylate, 1,4-butanediol diacrylate, pentanediol diacrylate, hexanediol diacrylate, (ethoxylated) 1,4-butanediol diacrylate, (propoxylated) 1,4-butanediol diacrylate, (ethoxylated) 1,5-pentanediol diacrylate, (propoxylated) 1,5-pentanediol diacrylate, (ethoxylated) 1,6-hexanediol diacrylate, (propoxylated) 1,6-hexanediol diacrylate, (ethoxylated) 1,8-octanediol diacrylate,(propoxylated) 1,8-octanediol diacrylate, (ethoxylated)neopentyl glycol diacrylate, (propoxylated)neopentyl glycol diacrylate, propylene glycol dimethacrylate, dipropylene glycol dimethacrylate, tripropylene glycol dimethacrylate, tetrapropylene glycol dimethacrylate, ethylene glycol dimethacrylate, diethylene glycol dimethacrylate, triethylene glycol dimethacrylate, tetraethylene glycol dimethacrylate, 1,3-propanediol dimethacrylate, 1,2-butanediol dimethacrylate, 1,3-butanediol dimethacrylate, 1,4-butanediol dimethacrylate, pentanediol dimethacrylate, hexanediol dimethacrylate, (ethoxylated) 1,4-butanediol dimethacrylate, (propoxylated) 1,4-butanediol dimethacrylate, (ethoxylated) 1,5-pentanediol dimethacrylate, (propoxylated) 1,5-pentanediol dimethacrylate, (ethoxylated) 1,6-hexanediol dimethacrylate, (propoxylated) 1,6-hexanediol dimethacrylate, (ethoxylated) 1,8-octanediol dimethacrylate,(propoxylated) 1,8-octanediol dimethacrylate, (ethoxylated)neopentyl glycol dimethacrylate, (propoxylated)neopentyl glycol dimethacrylate, polyethylene glycol diacrylate, polyethyleneglycol dimethacrylate, poly(propylene glycol) diacrylate, poly(propylene glycol) dimethacrylate.

Examples of trifunctional (meth)acrylates are trimethylolpropane triacrylate (TMPTA), trimethylolpropane trimethacrylate (TMPTMA), ethoxylated trimethylolpropane triacrylates (in particular selected from the group consisting of ethoxylated (EO3) trimethylolpropane triacrylates, ethoxylated (EO6) trimethylolpropane triacrylates, ethoxylated (EO9) trimethylolpropane triacrylates), propoxylated trimethylolpropane triacrylates (PO3 TMPTA), ethoxylated glycerol triacrylates and propoxylated glycerol triacrylates (GPTA), pentaerythritol triacrylates (PETA), a mixture of pentaerythritol triacrylate and tetraacrylate, ethoxylated pentaerythritol triacrylates, propoxylated pentaerythritol triacrylates (ethoxylated (EO3) pentaerythritol triacrylates, ethoxylated (EO6) pentaerythritol triacrylates, ethoxylated (EO9) pentaerythritol triacrylates) and mixtures thereof.

Examples of tetrafunctional (meth)acrylates are bistrimethylolpropane tetraacrylate (DiTMPTA), pentaerythritol tetracrylate (PETA), pentaerythritol tetramethacrylate, bistrimethylolpropane tetraacrylate, bistrimethylolpropane tetramethacrylate, ethoxylated bistrimethylolpropane tetraacrylate, propoxylated bistrimethylolpropane tetraacrylate, ethoxylated pentaerythritol tetraacrylate (EPETA), propoxylated pentaerythritol tetraacrylate, dipentaerythritol tetraacrylate, ethoxylated dipentaerythritol tetraacrylate, propoxylated dipentaerythritol tetraacrylate and mixtures thereof.

Examples of pentafunctional (meth)acrylates are dipentaerythritol pentaacrylate, sorbitol pentaacrylate and mixtures thereof.

Examples of hexafunctional (meth)acrylates are dipentaerythritol hexaacrylate, EBECRYL^{®} 1290, which is a hexafunctional aliphatic urethane hexaacrylate and mixtures thereof.

More preferably the reactive diluent having at least 2 ethylenically unsaturated groups in the molecule is selected from bis(4-vinylthiophenyl)sulfide, bis(4-methacryloylthiophenyl)sulfide, dipropylene glycol diacrylate, tripropylene glycol diacrylate, dipropylene glycol dimethacrylate, tripropylene glycol dimethacrylate, diethylene glycol diacrylate, triethylene glycol diacrylate, diethylene glycol dimethacrylate, triethylene glycol dimethacrylate, butanediol diacrylate, butanediol dimethacrylate, hexanediol diacrylate, hexanediol dimethacrylate, octanediol diacrylate, octanediol dimethacrylate, nonanediol diacrylate, nonanediol dimethacrylate, decanediol diacrylate, decanediol dimethacrylate, cyclohexanediol diacrylate, cyclohexanediol dimethacrylate, cyclohexanedimethanol diacrylate, cyclohexanedimethanol dimethacrylate, (ethoxylated)neopentyl glycol diacrylate, (propoxylated)neopentyl glycol diacrylate, (ethoxylated)neopentyl glycol dimethacrylate, (propoxylated)neopentyl glycol dimethacrylate, trimethylolpropane triacrylate (TMPTA), trimethylolpropane trimethacrylate (TMPTMA), ethoxylated trimethylolpropane triacrylates, ethoxylated trimethylolpropane trimethacrylates, propoxylated trimethylolpropane triacrylates, propoxylated trimethylolpropane trimethacrylates, ethoxylated glycerol triacrylates, ethoxylated glycerol trimethacrylates, propoxylated glycerol triacrylates, propoxylated glycerol trimethacrylates, bistrimethylolpropane tetraacrylate, bistrimethylolpropane tetramethacrylate, ethoxylated bistrimethylolpropane tetraacrylates, propoxylated bistrimethylolpropane tetraacrylates, pentaerythritol tetraacrylate, pentaerythritol tetramethacrylate, ethoxylated pentaerythritol tetraacrylates, ethoxylated pentaerythritol tetramethacrylates, propoxylated pentaerythritol tetraacrylates, propoxylated pentaerythritol tetramethacrylates, dipentaerythritol hexaacrylate, ethoxylated dipentaerythritol hexaacrylates, propoxylated dipentaerythritol hexaacrylates and mixtures thereof.

In addition to reactive diluents having at least 2 ethylenically unsaturated groups in the molecule the composition of the present application may comprise monofunctional diluents.

Examples of monofunctional vinylamides include N-vinyl-pyrrolidone, N-vinylcaprolactame, N-(hydroxymethyl)vinylamide, N-hydroxyethyl vinylamide, N-isopropylvinylamide, N-isopropylmethvinylamide, N-tert-butylvinylamide, N,N'-methylenebisvinylamide, N-(isobutoxymethyl)vinylamide, N-(butoxymethyl)vinylamide, N-[3-(dimethylamino)propyl]methvinylamide, N,N-dimethylvinylamide, N,N-diethylvinylamide and N-methyl-N-vinylacetamide.

Examples of monofunctional (meth)acrylamides include acryloylmorpholine, methacryloylmorpholine, N-(hydroxymethyl)acrylamide, N-hydroxyethyl acrylamide, N-isopropylacrylamide, N-isopropylmethacrylamide, N-tert-butylacrylamide, N,N'-methylenebisacrylamide, N-(isobutoxymethyl)acrylamide, N-(butoxymethyl)acrylamide, N-[3-(dimethylamino)propyl]methacrylamide, N,N-dimethylacrylamide, N,N-diethylacrylamide, N-(hydroxymethyl)methacrylamide, N-hydroxyethyl methacrylamide, N-isopropylmethacrylamide, N-isopropylmethmethacrylamide, N-tert-butylmethacrylamide, N-(isobutoxymethyl)methacrylamide, N-(butoxymethyl)methacrylamide, N-[3-(dimethylamino)propyl]methmethacrylamide, N,N-dimethylmethacrylamide and N,N-diethylmethacrylamide.

Further examples of a monofunctional diluent are N-vinyloxazolidinones of formula 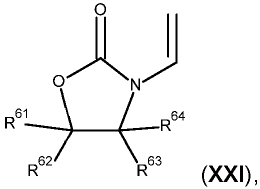 wherein
R⁶¹, R⁶², R⁶³ and R⁶⁴ are independently of each other a hydrogen atom or an organic group having not more than 10 carbon atoms, such as, for example, N-vinyloxazolidinone (NVO), or N-vinyl-5-methyl oxazolidinone (NVMO);
N-Vinyl-pyrrolidone (NVP), N-Vinyl-caprolactam (NVC), trimethylolpropane formal (meth)acrylates, such as, for example, 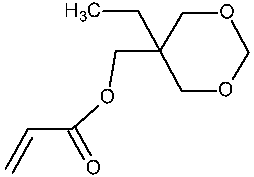 (trimethylolpropane formal acrylate) 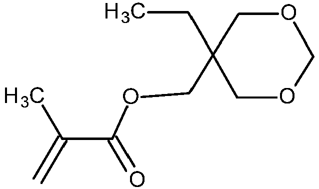 (trimethylolpropane formal methacrylate);

- di(meth)acrylamides of formula 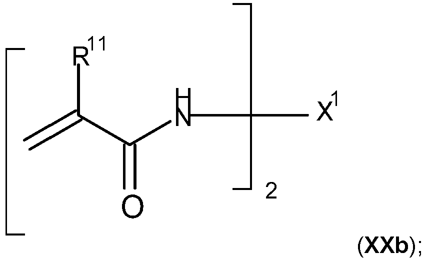 wherein
   R¹¹ is independently in each occurrence H, or a methyl group,
   X¹ is a group of formula 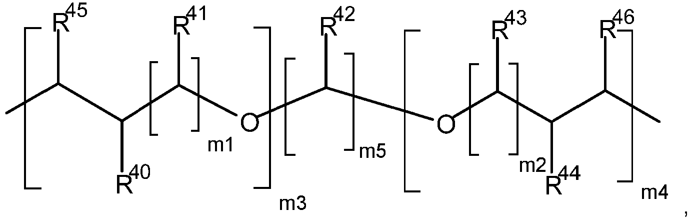
   wherein
   m1 is 0, or 1; m2 is 0, or 1;
   m3 is 0, or an integer of 1 to 10; m4 is 0, or an integer of 1 to 10;
   m5 is 0, or an integer 1 to 8;
   R⁴² is independently in each occurrence H, or a C₁-C₄alkyl group;
   R⁴⁰, R⁴¹, R⁴³, R⁴⁴, R⁴⁵ and R⁴⁶ are independently of each other H, or a C₁-C₄alkyl group.

Examples of monofunctional (meth)acrylates include without limitation octyl acrylate; decyl acrylate; lauryl acrylate, tridecyl acrylate; isodecyl acrylate; stearyl acrylate, 2-(2-ethoxyethoxy)ethyl acrylate, octyl methacrylate, lauryl methacrylate, isodecyl methacrylate, tridecyl methacrylate; tetradecyl methacrylate; isodecyl methacrylate and stearyl methacrylate, 3,3,5-trimethylcyclohexyl acrylate; isobornyl acrylate; 4-tert-butylcyclohexyl acrylate; cyclohexylmethacrylate, isobornyl methacrylate, tetrahydrofurfuryl acrylate, (5-ethyl-1,3-dioxan-5-yl)methyl acrylate, ethoxylated phenyl acrylate, ethoxylated phenyl methacrylate, nonyl phenol acrylate, nonyl phenol methacrylate, methoxy polyethyleneglycol acrylates, methoxy polyethyleneglycol methacrylates. methoxy polypropyleneglycol acrylates. methoxy polypropyleneglycol methacrylates, tetrahydrofurfuryl methacrylate, cyclic trimethylolpropane formal methacrylate, hydroxyethyl acrylate, hydroxypropyl acrylate and glycidyl acrylate, N-(2-hydroxyethyl)acrylate, hydroxyethyl methacrylate, hydroxypropyl methacrylate and glycidyl methacrylate, benzyl acrylate, 2-phenoxyethyl acrylate, ethoxylated (EO4) phenol acrylate; mixtures of ethoxylated (EO4) phenol acrylate and ethoxylated (EO8) nonylphenol acrylate; propoxylated (PO2) nonylphenol acrylate, ethoxylated o-phenylphenol acrylate, p-cumylphenoxylethyl acrylate, dicyclopentenyl acrylate and dicyclopentenyloxyethyl acrylate and 2-(N-butylcarbamoyloxy)ethyl acrylate.

The monofunctional (meth)acrylates may include hydroxyethyl acrylate, hydroxypropyl acrylate and glycidyl acrylate, N-(2-hydroxyethyl)acrylate, hydroxyethyl methacrylate, hydroxypropyl methacrylate, benzyl acrylate and glycidyl methacrylate.

In a preferred embodiment of the present invention the second monomer (component iii) comprises reactive diluents having a refractive index above 1.53, especially above 1.60, very especially above 1.70, such as, for example, (meth)acrylates, epoxides and episulfides. Acrylates, epoxides and episulfides, each with a functionality of greater than 1, are self-crosslinking radiation-curing compound systems.

Preferred acrylates are for example
- 2-((1,3-dithiolan-2-yl)methylthio)ethyl methacrylate ( 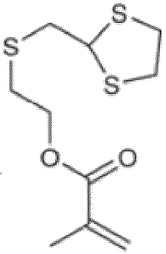 , Muchchintala Maheswara et al., Polymer Journal 42 (2010) pages249-255),
- phenylthioethyl acrylate ( 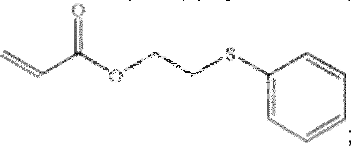 PTEA) with a refractive index of 1.557, and
- bis(4-methacryloylthiophenyl)sulfide with a refractive index of 1.695 ( 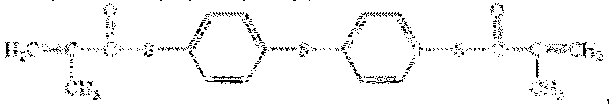 MPSMA).

In a preferred embodiment the reactive diluent having at least 2 ethylenically unsaturated groups in the molecule is selected from bis(4-methacryloylthiophenyl)sulfide, dipropylene glycol diacrylate, tripropylene glycol diacrylate, dipropylene glycol dimethacrylate, tripropylene glycol dimethacrylate, diethylene glycol diacrylate, triethylene glycol diacrylate, diethylene glycol dimethacrylate, triethylene glycol dimethacrylate, butanediol diacrylate, butanediol dimethacrylate, hexanediol diacrylate, hexanediol dimethacrylate, octanediol diacrylate, octanediol dimethacrylate, nonanediol diacrylate, nonanediol dimethacrylate, decanediol diacrylate, decanediol dimethacrylate, cyclohexanediol diacrylate, cyclohexanediol dimethacrylate, cyclohexanedimethanol diacrylate, cyclohexanedimethanol dimethacrylate, (ethoxylated)neopentyl glycol diacrylate, (propoxylated)neopentyl glycol diacrylate, (ethoxylated)neopentyl glycol dimethacrylate, (propoxylated)neopentyl glycol dimethacrylate, trimethylolpropane triacrylate (TMPTA), trimethylolpropane trimethacrylate (TMPTMA), ethoxylated trimethylolpropane triacrylates, ethoxylated trimethylolpropane trimethacrylates, propoxylated trimethylolpropane triacrylates, propoxylated trimethylolpropane trimethacrylates, ethoxylated glycerol triacrylates, ethoxylated glycerol trimethacrylates, propoxylated glycerol triacrylates, propoxylated glycerol trimethacrylates, bistrimethylolpropane tetraacrylate, bistrimethylolpropane tetramethacrylate, ethoxylated bistrimethylolpropane tetraacrylates, propoxylated bistrimethylolpropane tetraacrylates, pentaerythritol tetraacrylate, pentaerythritol tetramethacrylate, ethoxylated pentaerythritol tetraacrylates, ethoxylated pentaerythritol tetramethacrylates, propoxylated pentaerythritol tetraacrylates, propoxylated pentaerythritol tetramethacrylates, dipentaerythritol hexaacrylate, ethoxylated dipentaerythritol hexaacrylates, propoxylated dipentaerythritol hexaacrylates and mixtures thereof.

### Solvent (component iv))

The solvent is preferably selected from C₂-C₄alcohols, especially ethanol, 1-propanol and isopropanol; ketones, especially acetone, 2-butanone, 2-pentanone, 3-pentanone, cyclopentanone and cyclohexanone; ether alcohols, especially 1-methoxy-2-propanol; mixtures thereof and their mixtures with esters, especially ethyl acetate, 1-propyl acetate, isopropyl acetate and butyl acetate.

Most preferred, the solvent is selected from C₂-C₄alcohols, especially ethanol, 1-propanol and isopropanol and their mixtures with ketones, especially 2-butanone, 2-pentanone, 3-pentanone, cyclopentanone and cyclohexanone, or ether alcohols, especially 1-methoxy-2-propanol.

The weight ratio of second monomer iii) to titanium dioxide nanoparticles i) is in the range of from 4 to 100 % w/w of second monomer iii), preferably 5 to 75% w/w of second monomer iii), more preferably 10 to 50% of second monomer iii) relative to titanium dioxide nanoparticles i).

In addition, the composition may comprise one, or more oligomers. The oligomer is preferably selected from (meth)acrylic oligomers, urethane (meth)acrylate oligomers, polyester (meth)acrylate oligomers, polyether based (meth)acrylate oligomers, amine modified polyether based (meth)acrylate oligomers or epoxy (meth)acrylate oligomers, more preferably urethane (meth)acrylate oligomers, polyester (meth)acrylate oligomers, polyether based (meth)acrylate oligomers, and epoxy (meth)acrylate oligomers and mixtures thereof.

A coating obtainable from the coating composition according to the present invention has a refractive index (at 589 nm) of greater than 1.7, especially of greater than 1.8, very especially of greater than 1.9.

The coating obtained from the composition of the present application after exposure to UV light has preferably a transmission value of more than 85%, more preferably more than 90%, most preferred more than 95% in the wavelength range of 400 to 750 nm.

In case that the coating composition of the present invention comprises components i), ii), iii) and iv), the thickness of the cured coating is in the range of 0.1 to 30 micrometer, preferably 0.2 to 20 micrometer, more preferably 0.3 to 10 micrometer, most preferably 0.5 to 6 micrometer after drying and UV curing.

In case that the coating composition of the present invention does not comprise component iii), the thickness of the cured coating is in the range of 0.01 to 0.50 micrometer, preferably 0.02 to 0.40 micrometer, more preferably 0.03 to 0.30 micrometer, most preferably 0.04 to 0.25 micrometer after drying and UV curing.

A method for forming the coating having a high refractive index on a substrate comprises the steps of:
a) providing a substrate, preferably carrying a surface relief nano- and/or microstructure;
b) applying the coating composition according to the present invention to the substrate by means of wet coating, or printing;
c) removing the solvent; and
d) exposing the dry coating to actinic radiation, especially UV-light.

In addition, the present invention relates to security, or decorative elements, comprising a substrate, which may contain indicia or other visible features in or on its surface, and on at least part of the said substrate surface, a coating according to the present invention, or a coating obtained according to the method of the present invention.

The expression "surface relief" is used to refer to a non-planar part of the surface of a substrate, or layer, and typically defines a plurality of elevations and depressions. In particularly advantageous embodiments, the surface relief structure is a diffractive surface relief structure. The diffractive surface relief structure may be a diffraction grating (such as a square grating, sinusoidal grating, sawtooth grating or blazed grating), a hologram surface relief or another diffractive device that exhibits different appearances, e.g. diffractive colours and holographic replays (such as, for example, a lens, or microprism), at different viewing angles. For the purposes of this specification, such surface relief structures will be referred to as diffractive optically variable image devices (DOVIDs).

In embodiments, the high refractive index (HRI) layer obtained from the coating composition of the present invention may further comprise a dispersion of scattering particles having a dimension along at least one axis such that the HRI layer exhibits a first colour when viewed in reflection and a second, different colour when viewed in transmission.

The coating of the present invention can be used in the manufacture of surface relief micro- and nanostructures, such as, for example, optically variable devices (OVD), such as, for example, a hologram.

The method for forming a surface relief micro- and/or nanostructure on a substrate comprising the steps of:
a) forming a surface relief micro- and/or nanostructure on a discrete portion of the substrate;
b) depositing the coating composition according to the present invention on at least a portion of the surface relief micro- and/or nanostructure;
c) removing the solvent; and
d) curing the dry coating by exposing it to actinic radiation, especially UV-light.

A further specific embodiment of the invention concerns a preferred method for forming a surface relief micro- and/or nanostructure on a substrate, wherein step a) comprises
a1) applying a curable compound to at least a portion of the substrate;
a2) contacting at least a portion of the curable compound with surface relief micro- and/or nanostructure forming means; and
a3) curing the curable compound.

Alternatively, the method for forming a surface relief micro- and/or nanostructure on a substrate comprises the steps of
a') providing a sheet of base material, said sheet having an upper and lower surface;
b') depositing the coating composition according to the present invention on at least a portion of the upper surface;
c') removing the solvent;
d') forming a surface relief micro- and/or nanostructure on at least a portion of the coating composition, and
e') curing the dry coating obtained in step d') by exposing it to actinic radiation, especially UV-light.

Yet alternatively, the method for forming a surface relief micro- and/or nanostructure on a substrate comprises the steps of
a") providing a sheet of base material, said sheet having an upper and lower surface;
b") depositing the coating composition according to any of claims 1 to 8 on at least a portion of the upper surface;
c") removing the solvent;
d") forming a surface relief micro- and/or nanostructure on at least a portion of the coating composition, such that the micro- or nanostructure is formed, at least partially, in the base material;
e") curing the dry coating obtained in step d") by exposing it to actinic radiation, especially UV-light.

The (coating) composition of the present invention may be applied to the substrate by means of conventional printing press such as gravure, flexographic, ink jet, lithographic, offset, letterpress intaglio and/or screen process, or other printing process.

In another embodiment the composition may be applied by coating techniques, such as spraying, dipping, casting or spin-coating.

Preferably the printing process is carried out by gravure, flexographic, or by ink jet printing.

The resulting coatings, comprising the TiO₂ nanoparticles, are transparent in the visible region.

The transparent TiO₂ nanoparticles containing layer has a thickness in the range of 0.01 to 0.50 micrometer, preferably 0.02 to 0.40 micrometer, more preferably 0.03 to 0.30 micrometer, most preferably 0.04 to 0.25 micrometer after drying and UV curing; or the transparent TiO₂ nanoparticles containing layer has a thickness in the range of 0.10 to 30.0 micrometer, preferably 0.20 to 20.0 micrometer, more preferably 0.30 to 10 micrometer, most preferably 0.50 to 6.0 micrometer after drying and UV curing.

The TiO₂ nanoparticles containing coating is preferably dried at below 120°C to avoid damage of organic substrates and/or coating layers.

The resulting products may be overcoated with a protective coating to increase the durability and/or prevent copying of the security element. The protective coating is preferably transparent or translucent. The protective coating may have refractive index of from about 1.2 to about 1.75. Examples of such coatings are known to the skilled person. For example, water borne coatings, UV-cured coatings or laminated coatings may be used. Examples for typical coating resins will be given below. Coatings having a very low refractive index are, for example, described in US7821691, WO2008011919 and WO2013117334.

The composition may be coated onto organic foils via gravure printing followed by a transparent overcoat subsequently being UV-cured (e.g. Lumogen OVD Varnish 311^{®}).

The high refractive index coating according to the present invention may represent the dielectric layer in a so-called Fabry Perot Element. Reference is made, for example, to (EP1504923, WO01/03945, WO01/53113, WO05/38136, WO16173696). In said embodiment the security element comprises a mutlilayer structure capable of interference, wherein the multilayer structure capable of interference has a reflection layer, a dielectric layer, and a partially transparent layer (EP1504923, WO01/03945, WO01/53113, WO05/38136, WO16173696), wherein the dielectric layer is arranged between the reflection layer and the partially transparent layer.

Suitable materials for the reflective layer include aluminum, silver, copper mixtures or alloys thereof. The partially transparent layer can be composed of a semi-opaque materials, including metals such as chromium, nickel, titanium, vanadium, cobalt, and palladium, as well as other metals such as iron, tungsten, molybdenum, niobium and aluminum having a suitable thickness of about 3 to 15 nm. Various combinations and alloys of the above metals may also be utilized, such as Inconel (Ni-Cr-Fe). Other partially transparent materials include metal compounds such as metal fluorides, metal oxides, metal sulfides, metal nitrides, metal carbides, metal phosphides, metal selenides, metal silicides, and combinations thereof.

The reflective layer is preferably an aluminum or silver layer and the dielectric layer is preferably formed from the (surface functionalized) TiO₂ nanoparticles of the present invention.

The high refractive index coating according to the present invention may represent the partially transparent layers of a Fabry-Pérot resonator system and/or the reflection layer. The reflection layer may be also partially transparent.

In a further embodiment, the high refractive index coating according to the present invention may represent the semitransparent layer of a Fabry-Pérot resonator system and the second semitransparent layer may be represented by a continuous metallic layer, deposited, for example, by thermal evaporation method, or by a layer, comprising discrete metallic nanostructures capable of absorption of light in the visible wavelength range due to surface plasmon resonance, which may be deposited through vapor-phase metallization, for example, on a surface relief nanostructure, or by printing, or coating of compositions, comprising metal nanoparticles, especially copper, silver or gold nanoparticles ("plasmonic layer", see, for example, WO2011/064162, WO2012/176126, WO2020/083794 and WO2020/224982). The resulting optical effect observed from the side of the second semitransparent layer is a colored metallic reflection, modified by the interference color of the dielectric system in reflection. Observed from the high refractive index coating, the optical effect in reflection is the pure interference color resulting from the Fabry-Pérot resonator system. In transmission, observed from either the first surface or the second surface, the color is a subtractive mix of the absorption color from the plasmonic layer and the complementary color of the Fabry-Pérot resonator's interference color.

The plasmonic layer may also be manufactured by depositing a metal precursor composition on the underlying substrate or functional layer and exposing it to heat or actinic radiation as described, for example, in WO2016/170160A1, WO2018/210597 and WO2019/020682A1.

The high refractive index coating according to the present invention may be used in the fabrication of thin-film multilayer antireflective or reflective elements and coatings, comprising stacks of layers with different refractive indices. Reference is made, for example, to H. A. Macleod, "Thin-Film Optical Filters", published by Institute of Physics Publishing, 3rd edition, 2001; EP2806293A2 and DE102010009999A1.

In an additional embodiment the present invention is directed to a security, or decorative element, comprising a substrate, which may contain indicia or other visible features in or on its surface, and on at least part of the said substrate surface, a coating according to the present invention, or a coating obtained according to the method according to present invention.

The security element may comprise one, or more further functional layers, which are selected from black layers, white layers, continuous metallic layers, deposited, for example by thermal evaporation method, layers, comprising discrete metallic nanostructures capable of absorption of light in the visible wavelength range due to surface plasmon resonance, which may be deposited through vapor-phase metallization, for example, on a surface relief nanostructure, or by printing or coating of compositions, comprising metal nanoparticles, layers comprising surface relief nano- and/or microstructures, such as DOEs, micromirrors, microlenses, layers comprising magnetic pigments, cholesteric liquid crystal layers, fluorescent layers, interference layers, such as, for example, a Fabry-Perot stack; colored layers, IR-absorbing layers, colored IR-transparent layers,conductive layers, adhesive and release layers.

The functional layers might be fully, or partially printed on the substrate and/or underlying layer.

The security element of the present invention might be provided as a laminate onto a security document, or as a window on the security document, or embedded as a (windowed) thread into the security document.

The security document of the present is selected from a banknote, a tax stamp, an ID-card, avoucher, an entrance ticket and a label.

If applied on top of surface relief nano- and/or microstructure, the high refractive index layer may conformally adhere to the said surface relief nano- and/or microstructure, or at least partially flatten it. Reference is made to EP2042343A1 and WO2011116419. (Partial) flattening means in this context that the difference in distance between the highest features of the relief structure and the lowest features of the relief structure is reduced in the coated structure, compared to the uncoated one. Full flattening means in this context that the difference in distance between the highest features of the relief structure and the lowest features of the relief structure is zero.

The HRI coating composition of the present invention may be applied by printing to at least a part of surface relief nano- and/or microstructure, or to the whole structure.

In a particularly preferred embodiment the present invention is directed to
- a security element, comprising in this order
   i) an overprint varnish layer, a PET layer, an adhesive layer, or a release layer;
   ii) a colorshift layer, such as, for example, a cholesteric liquid crystal layer;
   iii) a layer of a partially black print, or negative microtext;
   iv) the HRI coating layer of the present invention, which flatten the surface relief nano- and/or microstructure (v);
   v) a surface relief nano- and/or microstructure;
   vi) optionally a PET layer;
   vii) optionally functional layer(s), comprising fluorescent, magnetic, NIR and conductive materials; and
   viii) an overprint varnish layer, a PET layer, an adhesive layer, or a release layer; or
- a security element, comprising in this order
   i) an overprint varnish layer, a PET layer, an adhesive layer, or a release layer;
   ii) a colorshift layer, such as, for example, a cholesteric liquid crystal layer;
   iii) a layer of a partially black print, or negative microtext;
   iiia) optionally a planarization layer;
   iv) the HRI coating layer of the present invention, which conformally adhere to the the surface relief nano- and/or microstructure (v);
   v) a surface relief nano- and/or microstructure;
   vi) optionally a PET layer;
   vii) optionally functional layer(s), comprising fluorescent, magnetic, NIR and conductive materials; and
   viii) an overprint varnish layer, a PET layer, an adhesive layer, or a release layer;

In another preferred embodiment the present invention is directed to security devices described, in principal, in WO2009/066048.

WO2009/066048 relates to security devices (10) comprising a first and a second layer (11a, lib) of a colourshifting material at least partially overlying each other and each having different colourshifting properties and, at least partially applied over an exposed surface of one of the colourshifting layers (11a, lib), a light control layer (12) having a surface structure which modifies the angle of reflected light, such that light reflected by the security device is seen at a different viewing angle and in at in least one region, a light absorbing layer (30) between the two colourshifting layers (11a, 11b). The HRI coating of the present invention may be the light control layer 12 that would allow to overvarnish and flatten the light control layer 12 with an overprint varnish. Alternatively, the light control layer 12 could be overcoated with HRI composition of the present invention.

In Figure 16 of WO2009/066048 the security device 10 comprises a first layer 11a of an optically variable liquid crystal material and a second layer 11b of an optically variable liquid crystal material, which exhibits different reflective characteristics to the first layer 11a. A partial absorbing layer 30 is applied between the first and second liquid crystal layers 11a and 11b. A light control layer 12, comprising a series of parallel linear microprisms, is applied to the second liquid crystal layer 11b. The light control layer 12 may be a partial layer, as described in reference to Figure 4, or a full layer. If the device 10 is intended to be viewed in reflection, it is preferable to have an additional dark absorbing layer 31 present under the first liquid crystal layer 11a.

The application of a partial absorbing layer 30 between the two liquid crystal layers 11a, 11b creates two optically variable regions, Regions A and B. In Region A there is no absorbing layer 30 between the two liquid crystal layers 11a, 11b such that the wavelength of reflected light, at any given angle of incidence, is a result of the additive mixing of the individual wavelengths of light reflected from the two liquid crystal layers 11a, 11b. In Region B there is an absorbing layer 30 between the two liquid crystal layers and the wavelength of reflected light, at any given angle of incidence, is solely the reflected light from the second liquid crystal layer 11b.

The absorbing layer 31 which lies under the first liquid crystal film layer 11a may be applied in the form of a design, creating a further optically variable Region C, as shown in Figure 17 OF WO2009/066048. In Region C there is no absorbing layerunder either of the liquid crystal layers 11a, 11b and when the device 10 is positioned on a reflective background, the intensity of the transmitted colour reflected back through the liquid crystal layers 11a, 11b saturates the reflective colour. The transmitted and reflected colours are complementary, for example, a red to green colourshift in reflection is seen as a cyan to magenta colourshift in transmission.

In another preferred embodiment the present invention is directed to a security device 10 described, in principal, in Figure 1 of of WO2013/017865. Figure 1 of WO2013/017865 illustrates a security device 10, comprising a carrier substrate 11. This substrate 11 is preferably a translucent or transparent polymeric film such as polyethylene (PET) or biaxially oriented polypropylene (BOPP). A light deflection structure 12 is applied to the substrate 11, either as a separate layer or formed in a surface of the substrate 11. The light deflection structure 12 is one that has facets or lenses which, when provided with a reflective coating 14 strongly reflects light substantially back to the light source when the light source is substantially parallel to the normal of the substrate and when the light source is away from the normal to the security device 10. One form of suitable light reflection structure 12 comprises a prismatic structure comprising a series of adjacent parallel linear prisms 17 with planar facets arranged to form a grooved surface. These can be formed by either thermally embossing the prisms into the substrate 11 or by casting the prisms into a resin which is curable by ultra-violet light or e- beam irradiation. Examples of other suitable light deflection structures 12 include, but are not limited to, a ruled array of tetrahedra, an array of square pyramids, an array of corner-cube structures, an array of hexagonal-faced corner-cubes and a saw-tooth prismatic array. Other structures may also be used, such as Fresnel lenses and lenticular lenses. The light deflection structure 12 is then provided with either positive or negative indicia 13 by coating or covering selected regions 15 of the light deflection structure 12 with the HRI coating layer 14 of the present invention, whilst leaving other regions 16 uncoated or uncovered.

Security devices of the sort described above can be incorporated into or applied to any article for which an authenticity check is desirable. In particular, such devices may be applied to or incorporated into documents of value such as banknotes, passports, driving licences, cheques, identification cards etc. The security device or article can be arranged either wholly on the surface of the base substrate of the security document, as in the case of a stripe or patch, or can be visible only partly on the surface of the document substrate, e.g. in the form of a windowed security thread. Security threads are now present in many of the world's currencies as well as vouchers, passports, travellers' cheques and other documents. In many cases the thread is provided in a partially embedded or windowed fashion where the thread appears to weave in and out of the paper and is visible in windows in one or both surfaces of the base substrate. One method for producing paper with so-called windowed threads can be found in EP-A-0059056. EP-A-0880298 and WO-A-03095188 describe different approaches for the embedding of wider partially exposed threads into a paper substrate. Wide threads, typically having a width of 2 to 6mm, are particularly useful as the additional exposed thread surface area allows for better use of optically variable devices. The security device or article may be subsequently incorporated into a paper or polymer base substrate so that it is viewable from both sides of the finished security substrate. Methods of incorporating security elements in such a manner are described in EP-A-1 141480 and WO-A-03054297. In the method described in EP-A-1 141480, one side of the security element is wholly exposed at one surface of the substrate in which it is partially embedded, and partially exposed in windows at the other surface of the substrate.

Base substrates suitable for making security substrates for security documents may be formed from any conventional materials, including paper and polymer. Techniques are known in the art for forming substantially transparent regions in each of these types of substrate. For example, WO-A-8300659 describes a polymer banknote formed from a transparent substrate comprising an opacifying coating on both sides of the substrate. The opacifying coating is omitted in localised regions on both sides of the substrate to form a transparent region. In this case the transparent substrate can be an integral part of the security device or a separate security device can be applied to the transparent substrate of the document. WO-A-0039391 describes a method of making a transparent region in a paper substrate. Other methods for forming transparent regions in paper substrates are described in EP-A-72350, EP-A-724519, WO-A-03054297 and EP-A-1398174.

The security device may also be applied to one side of a paper substrate so that portions are located in an aperture formed in the paper substrate. An example of a method of producing such an aperture can be found in WO-A-03054297. An alternative method of incorporating a security element which is visible in apertures in one side of a paper substrate and wholly exposed on the other side of the paper substrate can be found in WO-A-2000/39391.

Typically the security product includes banknotes, credit cards, identification documents like passports, identification cards, driver licenses, or other verification documents, pharmaceutical apparel, software, compact discs, tobacco packaging and other products or packaging prone to counterfeiting or forgery.

The substrate may comprise any sheet material. The substrate may be opaque, substantially transparent or translucent, wherein the method described in WO08/061930 is especially suited for substrates, which are opaque to UV light (non-transparent). The substrate may comprise paper, leather, fabric such as silk, cotton, tyvac, filmic material or metal, such as aluminium. The substrate may be in the form of one or more sheets or a web.

The substrate may be mould made, woven, non-woven, cast, calendared, blown, extruded and/or biaxially extruded. The substrate may comprise paper, fabric, man made fibres and polymeric compounds. The substrate may comprise any one or more selected from the group comprising paper, papers made from wood pulp or cotton or synthetic wood free fibres and board. The paper/board may be coated, calendared or machine glazed; coated, uncoated, mould made with cotton or denim content, Tyvac, linen, cotton, silk, leather, polythyleneterephthalate, polypropylene propafilm, polyvinylchloride, rigid PVC, cellulose, tri-acetate, acetate polystyrene, polyethylene, nylon, acrylic and polytherimide board. The polythyleneterephthalate substrate may be Melinex type film orientated polypropylene (obtainable from DuPont Films Willimington Delaware product ID Melinex HS-2).

The substrates being transparent films or non-transparent substrates like opaque plastic, paper including but not limited to banknote, voucher, passport, and any other security or fiduciary documents, self adhesive stamp and excise seals, card, tobacco, pharmaceutical, computer software packaging and certificates of authentication, aluminium, and the like.

In a preferred embodiment of the present invention the substrate is a non-transparent (opaque) sheet material, such as, for example, paper. Advantageously, the paper may be precoated with an UV curable lacquer. Suitable UV curable lacquers and coating methods are described, for example, WO2015/049262 and WO2016/156286.

In another preferred embodiment of the present invention the substrate is a transparent or translucent sheet material, such as, for example, polyethylene terephthalate, polyethylene naphthalate, polyvinyl butyral, polyvinyl chloride, flexible polyvinyl chloride, polymethyl methacrylate, poly(ethylene-co-vinyl acetate), polycarbonate, cellulose triacetate, polyether sulfone, polyester, polyamide, polyolefins, such as, for example, polypropylene, and acrylic resins. Among these, polyethylene terephthalate and polypropylene are preferred. The flexible substrate is preferably biaxially oriented.

The forming of an optically variable image on the substrate may comprise depositing a curable composition on at least a portion of the substrate, as described above. The curable composition, generally a coating or lacquer may be deposited by means of gravure, flexographic, ink jet and screen process printing. The curable lacquer may be cured by actinic radiations, preferably ultraviolet (UV) light or electron beam. Preferably, the curable lacquer is UV cured. UV curable lacquers are well known and can be obtained from e.g. BASF SE. The lacquers exposed to actinic radiations or electron beam used in the present invention are required to reach a solidified stage when they separate again from the imaging shim in order to keep the record in their upper layer of the sub-microscopic, holographic diffraction grating image or pattern (optically variable image, OVI). Particularly suitable for the lacquer compositions are mixtures of typical well-known components (such as photoinitiators, monomers, oligomers. levelling agents etc.) used in the radiation curable industrial coatings and graphic arts. Particularly suitable are compositions containing one or several photo-latent catalysts that will initiate polymerization of the lacquer layer exposed to actinic radiations. Particularly suitable for fast curing and conversion to a solid state are compositions comprising one or several monomers and oligomers sensitive to free-radical polymerization, such as acrylates, methacrylates or monomers or/and oligomers, containing at least one ethylenically unsaturated group, examples have already been given above. Further reference is made to pages 8 to 35 of WO2008/061930.

The UV lacquer may comprise an epoxy monomer from the CRAYNOR^{®} Sartomer Europe range (10 to 60%) and one or several acrylates (monofunctional and multifunctional), monomers which are available from Sartomer Europe (20 to 90%) and one, or several photoinitiators (1 to 15%) such as Darocure^{®} 1173 and a levelling agent such as BYK^{®}361 (0.01 to 1%) from BYK Chemie. The UV lacquer may also be used for overcoating.

The epoxy monomer is selected from aromatic glycidyl ethers and aliphatic glycidyl ethers. Aromatic glycidyl ethers are, for example, bisphenol A diglycidyl ether, bisphenol F diglycidyl ether, bisphenol B diglycidyl ether, bisphenol S diglycidyl ether, hydroquinone diglycidyl ether, alkylation products of phenol/dicyclopentadiene, e.g., 2,5-bis[(2,3-epoxypropoxy)phenyl]octahydro-4,7-methano-5H-indene (CAS No. [13446-85-0]), tris[4-(2,3-epoxypropoxy)phenyl]methane isomers (CAS No. [66072-39-7]), phenol-based epoxy novolaks (CAS No. [9003-35-4]), and cresol-based epoxy novolaks (CAS No. [37382-79-9]). Examples of aliphatic glycidyl ethers include 1,4-butanediol diglycidyl ether, 1,6-hexanediol diglycidyl ether, trimethylolpropane triglycidyl ether, pentaerythritol tetraglycidyl ether, 1,1,2,2-tetrakis[4-(2,3-epoxypropoxy)phenyl]ethane (CAS No. [27043-37-4]), diglycidyl ether of polypropylene glycol (α,ω-bis(2,3-epoxypropoxy)poly(oxypropylene), CAS No. [16096-30-3]) and of hydrogenated bisphenol A (2,2-bis[4-(2,3-epoxypropoxy)cyclohexyl]propane, CAS No. [13410-58-7]).

The one or several acrylates are preferably multifunctional monomers which are selected from trimethylolpropane triacrylate, trimethylolethane triacrylate, trimethylolpropane trimethacrylate, trimethylolethane trimethacrylate, tetramethylene glycol dimethacrylate, triethylene glycol dimethacrylate, tetraethylene glycol diacrylate, tripropylene glycol diacrylate (TPGDA), dipropylene glycol diacrylate (DPGDA), pentaerythritol diacrylate, pentaerythritol triacrylate, pentaerythritol tetraacrylate, dipentaerythritol diacrylate, dipentaerythritol triacrylate, dipentaerythritol tetraacrylate, dipentaerythritol pentaacrylate, dipentaerythritol hexaacrylate, tripentaerythritol octaacrylate, pentaerythritol dimethacrylate, pentaerythritol trimethacrylate, dipentaerythritol dimethacrylate, dipentaerythritol tetramethacrylate, tripentaerythritol octamethacrylate, pentaerythritol diitaconate, dipentaerythritol tris-itaconate, dipentaerythritol pentaitaconate, dipentaerythritol hexaitaconate, ethylene glycol diacrylate, 1,3-butanediol diacrylate, 1,3-butanediol dimethacrylate, 1,4-butanediol diitaconate, sorbitol triacrylate, sorbitol tetraacrylate, pentaerythritol-modified triacrylate, sorbitol tetra methacrylate, sorbitol pentaacrylate, sorbitol hexaacrylate, oligoester acrylates and methacrylates, glycerol diacrylate and triacrylate, 1,4-cyclohexane diacrylate, bisacrylates and bismethacrylates of polyethylene glycol with a molecular weight of from 200 to 1500, triacrylate of singly to vigintuply alkoxylated, more preferably singly to vigintuply ethoxylated trimethylolpropane, singly to vigintuply propoxylated glycerol or singly to vigintuply ethoxylated and/or propoxylated pentaerythritol, such as, for example, ethoxylated trimethylol propane triacrylate (TMEOPTA) and or mixtures thereof.

The photoinitiator may be a single compound, or a mixture of compounds. Examples of photoinitiators are known to the person skilled in the art and for example published by Kurt Dietliker in "A compilation of photoinitiators commercially available for UV today", Sita Technology Textbook, Edinburgh, London, 2002.

The photoinitiator may be selected from acylphosphine oxide compounds, benzophenone compounds, alpha-hydroxy ketone compounds, alpha-alkoxyketone compounds, alpha-aminoketone compounds, phenylglyoxylate compounds, oxime ester compounds, mixtures thereof and mixtures and mixtures thereof.

The photoinitiator is preferably a blend of an alpha-hydroxy ketone, alpha-alkoxyketone or alpha-aminoketone compound and a benzophenone compound; or a blend of an alpha-hydroxy ketone, alpha-alkoxyketone or alpha-aminoketone compound, a benzophenone compound and an acylphosphine oxide compound.

The curable composition is preferably deposited by means of gravure or flexographic printing. The curable composition can be coloured.

An OVD is cast into the surface of the curable composition with a shim having the OVD thereon, the holographic image is imparted into the lacquer and instantly cured via a UV lamp, becoming a facsimile of the OVD disposed on the shim (US4,913,858, US5,164,227, WO2005/051675 and WO2008/061930).

The curable coating composition according to the present invention may be applied to the OVD by means of conventional printing press such as gravure, ink-jet, rotogravure, flexographic, lithographic, offset, letterpress intaglio and/or screen process, or other printing process.

Preferably, the HRI layer, which is printed over the OVD, is also sufficiently thin as to allow viewing in transmission and reflectance. In other words the whole security element on the substrate allows a viewing in transmission and reflectance.

The curable composition may further comprise modifying additives.

Specific additives can be added to the composition to modify its chemicals and/or physical properties. Polychromatic effects can be achieved by the introduction of (colored) inorganic and/or organic pigments and/or solvent soluble dyestuffs into the ink, to achieve a range of coloured shades. By addition of a dye the transmission colour can be influenced. By the addition of fluorescent or phosphorescent materials the transmission and/or the reflection colour can be influenced.

Suitable colored pigments especially include organic pigments selected from the group consisting of azo, azomethine, methine, anthraquinone, phthalocyanine, perinone, perylene, diketopyrrolopyrrole, thioindigo, dioxazine, iminoisoindoline, iminoisoindolinone, quinacridone, flavanthrone, indanthrone, anthrapyrimidine and quinophthalone pigments, or a mixture or solid solution thereof; especially a dioxazine, diketopyrrolopyrrole, quinacridone, phthalocyanine, indanthrone or iminoisoindolinone pigment, or a mixture or solid solution thereof.

Colored organic pigments of particular interest include C.I. Pigment Red 202, C.I. Pigment Red 122, C.I. Pigment Red 179, C.I. Pigment Red 170, C.I. Pigment Red 144, C.I. Pigment Red 177, C.I. Pigment Red 254, C.I. Pigment Red 255, C.I. Pigment Red 264, C.I. Pigment Brown 23, C.I. Pigment Yellow 109, C.I. Pigment Yellow 110, C.I. Pigment Yellow 147, C.I. Pigment Orange 61, C.I. Pigment Orange 71, C.I. Pigment Orange 73, C.I. Pigment Orange 48, C.I. Pigment Orange 49, C.I. Pigment Blue 15, C.I. Pigment Blue 60, C.I. Pigment Violet 23, C.I. Pigment Violet 37, C.I. Pigment Violet 19, C.I. Pigment Green 7, C.I. Pigment Green 36, the 2,9-dichloro-quinacridone in platelet form described in WO08/055807, or a mixture or solid solution thereof.

Plateletlike organic pigments, such as plateletlike quinacridones, phthalocyanine, fluororubine, dioxazines, red perylenes or diketopyrrolopyrroles can advantageously be used.

Suitable colored pigments also include conventional inorganic pigments; especially those selected from the group consisting of metal oxides, antimony yellow, lead chromate, lead chromate sulfate, lead molybdate, ultramarine blue, cobalt blue, manganese blue, chrome oxide green, hydrated chrome oxide green, cobalt green and metal sulfides, such as cerium or cadmium sulfide, cadmium sulfoselenides, zinc ferrite, bismuth vanadate, Prussian blue, Fe₃O₄, carbon black and mixed metal oxides.

Examples of dyes, which can be used to color the curable composition, are selected from the group consisting of azo, azomethine, methine, anthraquinone, phthalocyanine, dioxazine, flavanthrone, indanthrone, anthrapyrimidine and metal complex dyes. Monoazo dyes, cobalt complex dyes, chrome complex dyes, anthraquinone dyes and copper phthalocyanine dyes are preferred.

The surface relief micro- and nanostructures are, for example, microlense arrays, micromirror arrays, optically variable devices (OVDs), which are, for example, diffractive optical variable image s (DOVIs). The term "diffractive optically variable image" as used herein may refer to any type of holograms including, for example, but not limited to a multiple plane hologram (e.g., 2-dimensional hologram, 3-dimensional hologram, etc.), a stereogram, and a grating image (e.g., dot-matrix, pixelgram, exelgram, kinegram, etc.).

Examples of an optically variable device are holograms or diffraction gratings, moire grating, lenses etc. These optical micro- and nanostructured devices (or images) are composed of a series of structured surfaces. These surfaces may have straight or curved profiles, with constant or random spacing, and may even vary from microns to millimetres in dimension. Patterns may be circular, linear, or have no uniform pattern. For example a Fresnel lens has a micro- and nanostructured surface on one side and a plane surface on the other. The micro- and nanostructured surface consists of a series of grooves with changing slope angles as the distance from the optical axis increases. The draft facets located between the slope facets usually do not affect the optical performance of the Fresnel lens.

A further aspect of the present invention is the use of the element as described above for the prevention of counterfeit or reproduction, on a document of value, right, identity, a security label or a branded good.

The compositions, comprising the metal oxide nanoparticles of the present invention, may be applied on top of the surface relief micro- and nanostructures in transparent windows, security threads and foils on the document of value, right, identity, a security label or a branded good.

The coatings of the present invention may be used in a method of manufacturing a security device described in EP2951023A1 comprising:
(a) providing a transparent substrate,
(b) applying a curable transparent material to a region of the substrate;
(c) in a first curing step, partially curing the curable transparent material by exposure to curing energy;
(d) applying a layer of the coating of the present invention (reflection enhancing material) to the curable transparent material;
(e) forming the partially cured transparent material and the layer of coating composition such that both surfaces of the layer of the coating of the present invention follow the contours of an optically variable effect generating relief structure,
(f) in a second curing step, fully curing the formed transparent material by exposure to curing energy such that the relief structure is retained by the formed transparent material. Various aspects and features of the present invention will be further discussed in terms of the examples. The following examples are intended to illustrate various aspects and features of the present invention.

Various aspects and features of the present invention will be further discussed in terms of the examples. The following examples are intended to illustrate various aspects and features of the present invention.

### Examples

### Measurement of pH of dispersions in ethanol

The aliquots of nanoparticles dispersions in ethanol were mixed with deionized water (1:1 v/v) under vigorous stirring and pH was measured in the resulting mixture by means of pH meter.

### Measurement of refractive indices of the coatings by ellipsometry

The formulations were spin-coated onto polished silicon wafers, solvent was evaporated by air-drier at 100°C for 0.5 min and the dry coatings were irradiated with medium-pressure Hg lamp with total UV dose of 500 mJ/cm², to obtain coatings with thicknesses of at least 140 nm (thickness was measured with KLA Tencor Alpha-Step D-100 Stylus Profiler). The data was acquired in Reflectance mode at 65°, 70° and 75° angles, using Woollam M-2000-R19 ellipsometer (589 nm), and the obtained data was fitted using the Cauchy model with WVase32 software.

### Measurement of particle size distribution by DLS

The measurements were performed using Malvern Zetasizer Nano ZS device with ca. 3% w/w dispersions of nanoparticles in a suitable solvent. Measurements in ethanol were performed in presence of acrylic acid (15% w/w of acrylic acid relative to particles weight was added). Measurements in water were performed in presence of 1 mM HCl. D10, D50 and D90 values are given for volume distributions.

### Measurement of solids content

The solids content of powders and dispersions was determined using Mettler-Toledo HR-73 halogen moisture analyzer at 105°C, or 130°C (for dispersion, containing cyclopentanone).

### Measurement of total amount of volatile surface-modifying compounds

The total amount of volatile surface-modifying compounds was determined in dispersions after neutralization step as weight loss in the range 200-600°C relative to the residue at 600°C in thermogravimetric analysis using TGA/DSC 3+ thermogravimetric analyser from Mettler-Toledo, with the proviso that the highest boiling solvent in the composition has a boiling point of below about 170°C. About 20 to 40 mg of dispersion sample was filled in a tared aluminum crucible, sealed immediately to avoid weight loss before experiment and weighed. The exact mass of sample was recorded. The aluminum crucible is put in the TGA oven at 30°C. The lid of the crucible is pierced at the time. Heating rate was 10°C/min, the measurements were done under nitrogen flow in the range from 30 to 600°C.

### XRD measurements

Powder samples were loaded on to a special flat plate Silicon sample holder, taking special care on producing a flat and smooth surface with the correct alignment to the sample holder zero-reference to avoid large systematic errors. The silicon sample holder was manufactured such that the it does not produce sharp diffraction features but only a weak and smooth background.

The sample on the sample holder was loaded in to a Panalytical 'XPert3 Powder equipped with a sealed Cu tube producing a characteristic X-ray lines Cu K_{α} and Cu K_{β} with wavelengths λ₁= 1.54056 Å (Cu K_{α1}), λ₂= 1.54439 Å (Cu K_{α2}), I₂/I₁ = 0.5 and λ₂= 1.3922 Å (Cu K_{β}). The contribution of the latter (Cu K_{β}) was removed introducing a Ni-filter on the incident beam of the diffractometer right after the Cu-tube.

Diffraction data was collected from 10 to 80 °2θ, using a step of 0.026 °2θ for a total time of 2h and spinning the sample around its axis at a rate of 0.13 rate/s in order to increase the sampling statistic.

The analysis of the diffraction patterns in terms of crystallographic phase analysis and average domain size was performed using the Panalytical HighScore software (v 4.8+) and the Bruker Topas6 program, obtaining consistent results.

The volume weighted domain size of diffraction (Dv) was evaluated using the Scherrer equation (B.E. Warren, X-Ray Diffraction, Addison-Wesley Publishing Co., 1969) Dv = K λ / [β cos(θ)], where K(~1) is the shape factor, dependent on the shape and reciprocal space direction, λ the wavelength, β the integral breadth of the diffraction peak and θ the scattering half-angle. To ensure a correct determination of the Dv, the integral breadth β was amended of the instrumental contribution. To achieve this, the line-broadening of the powder reference material LaB₆ was measured and evaluated according to the same procedure, as described above.

### Evaluation of light fastness of the coatings.

Light fastness of the coatings was assessed using filtered Xenon lamp on the W.O.M. CI 65 device from ATLAS according to the test method DIN EN ISO 105-B02, using the following parameters:
- Illumination intensity: [ E ] 1,1 W/m² at 420 nm
- Filter: CIRA - Innerfilter and Soda Lime - outerfilter plus a filterlantern made from glass according to DIN 572-4

The transmittance of the filters should be at least 90% between 380 and 750 nm and go down to zero between 310 und 320 nm.

| | |
|---|---|
| - Relative humidity | 50 ±5% |
| - Temperature during exposure | 30 ±5°C |
| - Black panel temperature | 45 ±5°C |

The test is carried out as follows:
Expose the samples and the Blue Wool Scale to the light for 120 h.

Determine which of the blue wool references has changed to an extend equal to that of the test piece. Give the test piece a light-fastness rating that corresponds to the number of the blue wool reference that has approximately the same change as the test piece.

### Rating:

| | |
|---|---|
| 1 | Very poor |
| 2 | Poor |
| 3 | Moderate |
| 4 | Relatively good |
| 5 | Good |
| 6 | Very good |
| 7 | Excellent |
| 8 | Outstanding |

### Synthesis Example 1 (see PCT/EP2021/072873 (WO2022/038161))

### Step 1. Synthesis of TiO₂ nanoparticles

All operations were carried out under dry nitrogen atmosphere. 1-Methoxy-2-propanol (1060 g) was placed in a 2 L double-wall reactor, equipped with a mechanical stirrer and a reflux condenser at RT. Titanium tetraisopropylate (454.4 g) was added in one portion, upon which the temperature rose to 34°C. The mixture was cooled to 25°C and stirred for 1 h. Then a mixture of water (58.2 g) and 37% w/w hydrochloric acid (90.8 g) was added in one portion with stirring, upon which the temperature rose to ca. 40°C. The reaction mixture was heated from 40°C to 85°C over 90 min and was stirred for 4 h at this temperature.

The reaction mixture was cooled to 25°C and filtered under vacuum through a paper filter (20 µm pore size). The product was washed on the filter with absolute ethanol (800 g) slightly dried on the filter for 2 min. The off-white powder of TiO₂ nanoparticles agglomerates was obtained (179.5 g). Solids content at 100°C 64.4% w/w. XRD analysis showed anatase to be the predominant phase with crystalline domain size of 3.7±0.9 nm. D10(v) = 2.5 nm, D50(v) = 3.8 nm, D90(v) =7.4 nm (in 1 mM HCl in water).

### Step 2. Neutralization/re-dispersion of TiO₂ nanoparticles

The powder, obtained in Step 1 (169.3 g), was resuspended in absolute ethanol (377 g). The temperature of the mixture was raised to 75°C, acetylacetone (6.54 g) was added and the pH of the mixture was brought to 5.5 *via* dropwise addition of freshly prepared solution (23% w/w) of potassium methylate in absolute ethanol (60.38 ml) with stirring at 75°C. Upon addition of potassium methylate solution the turbidity of the mixture was strongly reduced due to the re-dispersion of TiO₂ nanoparticles agglomerates. The mixture was cooled to 25°C and filtered through the depth filter sheet (Filtrox AF ST130) under 2.5 Bar pressure to remove the formed potassium chloride along with the traces of non-re-dispersed TiO₂ nanoparticles. The yellowish filtrate, containing re-dispersed TiO₂ nanoparticles, was collected (552.0 g). Solids content at 100°C 18.9% w/w. D10(v) = 2.3 nm, D50(v) = 3.1 nm, D90(v) = 7.6 nm (in presence of acrylic acid in ethanol). Total amount of volatile surface-modifying compounds as determined by thermogravimetric analysis (weight loss in the range 200-600°C relative to the residue at 600°C) was found to be 18.0%; residue at 600°C was found to be 15.5% based on the total weight of dispersion.

### Application Example 1

### Preparation of formulations, coatings and measurements of refractive index of the coatings.

A. Trithiocyanuric acid (0.945 g) was added to 100 g of the dispersion, obtained in Synthesis Example 1, Step 2, the mixture was stirred for 30 min under argon atmosphere and then diluted with 278 g of absolute ethanol.
B. Cyclopentanone (40 g) was added to 100 g of dispersion, obtained in Synthesis Example 1, Step 2, and the mixture was concentrated on rotary evaporator at 70 mbar pressure and 35°C bath temperature to 30% solids content (measured at 130°C). Trithiocyanuric acid (2.84 g) and pentaerythritol tetraacrylate (4.24 g) were added and the mixture was stirred for 30 minutes under argon atmosphere.

### Substrate preparation

A PET foil (Melinex 506) was coated with a clear UV-curable varnish (Lumogen OVD 311, commercially available from BASF) using a wired K Hand Coater #1 and thus obtained coating was cured using a medium pressure mercury UV lamp (total UV dose ca. 350 mJ/cm²).

### Preparation of coatings, comprising TiO₂ nanoparticles and trithiocyanuric acid

The formulation A, prepared in application example 1, was coated onto thus prepared substrate using a wired K Hand Coater #0 (ca. 4 µm wet coating thickness), dried with an air-dryer at 80°C for 10 seconds and cured using a medium pressure mercury UV lamp (total UV dose ca. 500 mJ/cm²) to obtain cured Coating A. The coating was placed under ambient atmosphere and left for 72 h at room temperature.

The formulation B, prepared in application example 1, was coated onto thus prepared substrate, using a wired K Hand Coater #2 (ca. 12 µm wet coating thickness), dried with an air-dryer at 100°C for 30 seconds and cured using a medium pressure mercury UV lamp (total UV dose ca. 500 mJ/cm²) to obtain cured Coating B. The coating was left under ambient atmosphere for 72 h at room temperature.

### Refractive index measurements.

The refractive indices of coatings, obtained with formulations A and B were measured as described above. The data obtained are presented in Table 1.

**Table 1. Thickness and refractive index measurements.**

| | Cured coating thickness, nm | Refractive index at 589 nm |
|---|---|---|
| Formulation A | 150 ± 7 | 2.013 |
| Formulation B | 226 ± 5 | 1.861 |

### Evaluation of chemical fastness properties and mechanical stability of coatings

Chemical fastness was evaluated by immersing the coated foils after UV-curing and 72 h post-curing period into absolute ethanol, 20% w/w solution of acetic acid in water, 100% acetic acid, 5% w/w solution of NaOH in water or 5% HCl solution in water for 30 minutes at room temperature. After that, the foils were rinsed with deionized water and dried with an air-dryer at room temperature. The dry foils were assessed visually (reflectance color, caused by interference, and defects in coatings were observed) using a grayscale note from 0 to 4 (0 - coating completely disappeared, 1 - major change; more than 50% damaged, 2 - considerable change; less than 50% damaged, 3 - minor changes, 4 - coating unchanged), as compared to the untreated reference.

Mechanical stability of the coatings was evaluated by manually rubbing the coating once with a nylon glove and visually assessing the behavior using a note of 0, or 1 (0 - white traces on the coating, 1 - coating unchanged).

For light fastness evaluation, the cured coatings, obtained as described above from Formulations A and B, were overcoated with a clear UV-curable varnish (Lumogen^{®} OVD 311, commercially available from BASF) wired K Hand Coater #1 (ca. 6 µm wet coating thickness), and thus obtained coating was cured using a medium pressure mercury UV lamp (total UV dose ca. 350 mJ/cm²).

**Table 2. Chemical and mechanical fastness tests**

| | Coating A | Coating B |
|---|---|---|
| Ethanol | 4 | 4 |
| Acetic acid, 20% w/w in water | 4 | 3 |
| Acetic acid | 4 | 3 |
| HCl, 5% w/w in water | 0 | 3 |
| NaOH, 5% w/w in water | 4 | 2 |
| Mechanical stability | 1 | 1 |
| Light fastness | >6 | 5-6 |

## Claims

1. A coating composition, especially a UV-Vis curable coating composition, comprising
i) single or mixed metal oxide nanoparticles, wherein the volume average diameter (Dᵥ50) of the metal oxide nanoparticles is in the range of 1 to 20 nm,
ii) one or more monomers having at least three thiol groups (-SH) at the terminal end (the first monomer),
iii) optional one or more monomers having at least two functional groups at the terminal end being capable of reacting with the thiol groups and a spacer group between the at least two functional groups (the second monomer),
iv) one, or more solvents.

2. The coating composition according to claim 1, wherein the first monomer is a compound of formula 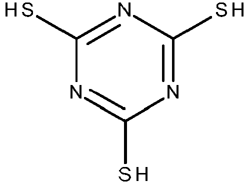 (trithiocyanuric acid).

3. The coating composition according to claim 1, or 2, wherein the second monomer is selected from bis(4-methacryloylthiophenyl)sulfide, dipropylene glycol diacrylate, tripropylene glycol diacrylate, dipropylene glycol dimethacrylate, tripropylene glycol dimethacrylate, diethylene glycol diacrylate, triethylene glycol diacrylate, diethylene glycol dimethacrylate, triethylene glycol dimethacrylate, butanediol diacrylate, butanediol dimethacrylate, hexanediol diacrylate, hexanediol dimethacrylate, octanediol diacrylate, octanediol dimethacrylate, nonanediol diacrylate, nonanediol dimethacrylate, decanediol diacrylate, decanediol dimethacrylate, cyclohexanediol diacrylate, cyclohexanediol dimethacrylate, cyclohexanedimethanol diacrylate, cyclohexanedimethanol dimethacrylate, (ethoxylated)neopentyl glycol diacrylate, (propoxylated)neopentyl glycol diacrylate, (ethoxylated)neopentyl glycol dimethacrylate, (propoxylated)neopentyl glycol dimethacrylate, trimethylolpropane triacrylate (TMPTA), trimethylolpropane trimethacrylate (TMPTMA), ethoxylated trimethylolpropane triacrylates, ethoxylated trimethylolpropane trimethacrylates, propoxylated trimethylolpropane triacrylates, propoxylated trimethylolpropane trimethacrylates, ethoxylated glycerol triacrylates, ethoxylated glycerol trimethacrylates, propoxylated glycerol triacrylates, propoxylated glycerol trimethacrylates, bistrimethylolpropane tetraacrylate, bistrimethylolpropane tetramethacrylate, ethoxylated bistrimethylolpropane tetraacrylates, propoxylated bistrimethylolpropane tetraacrylates, pentaerythritol tetraacrylate, pentaerythritol tetramethacrylate, ethoxylated pentaerythritol tetraacrylates, ethoxylated pentaerythritol tetramethacrylates, propoxylated pentaerythritol tetraacrylates, propoxylated pentaerythritol tetramethacrylates, dipentaerythritol hexaacrylate, ethoxylated dipentaerythritol hexaacrylates, propoxylated dipentaerythritol hexaacrylates and mixtures thereof.

4. The coating composition according to any of claims 1 to 3, wherein the solvent is selected from C₂-C₄alcohols, especially ethanol, 1-propanol and isopropanol; ketones, especially acetone, 2-butanone, 2-pentanone, 3-pentanone, cyclopentanone and cyclohexanone; ether alcohols, especially 1-methoxy-2-propanol; mixtures thereof and their mixtures with esters, especially ethyl acetate, 1-propyl acetate, isopropyl acetate and butyl acetate.

5. The coating composition according to any of claims 1 to 4, wherein the single or mixed metal oxide nanoparticles are titanium dioxide nanoparticles, which have a volume average diameter (Dᵥ50) in the range of 1 to 10 nm, preferably 1 to 5 nm.

6. The coating composition according to any of claims 1 to 5, wherein the nanoparticles comprise at least one volatile surface-modifying compound selected from ethanol and acetylacetone and mixtures thereof, wherein the total amount of volatile surface-modifying compounds is in the range of from 10 to 50 % by weight, especially from 10 to 40 % by weight, very especially from 15 to 35 % by weight based on the amount of metal oxide nanoparticles.

7. The coating composition according to any of claims 1 to 6, wherein the single, or mixed metal oxide nanoparticles are titanium dioxide nanoparticles and are obtained by a process comprising the following steps:
a) preparing a mixture, comprising a metal alkoxide of formula Ti(OR¹²)₄ (Xa), a solvent, HCl and water, wherein R¹² is C₁-C₄alkyl, preferably methyl, ethyl, n-propyl, iso-propyl and n-butyl;
b1) heating the mixture to a temperature of from 80°C to 100 °C;
b2) separating the obtained TiO₂ nanoparticles from the mixture;
b3) resuspending the TiO₂ nanoparticles in a C₁-C₄alcohol, or a mixture of C₁-C₄alcohols;
b4) optionally treating the TiO₂ nanoparticles with a β-diketone(s), or salt(s) thereof;
c1) treating the TiO₂ nanoparticles with a base;
c2) optionally treating the TiO₂ nanoparticles with a β-diketone(s), or salt(s) thereof;
c3) optionally treating the TiO₂ nanoparticles with a compound of formula Me'(OR^{20'})_{z} (VII), or mixtures thereof; and
c4) filtering the mixture to obtain the dispersion of TiO₂ nanoparticles, wherein
R^{20'} is a C₁-C₈ alkyl group, preferably a C₁-C₄ alkyl group;
Me' is selected from Zn (II), In (III), Sc (III), Y (III), La (III), Ce (IV), Ti (III), Ti (IV), Zr (IV), Hf (IV), Sn (IV), V (IV), Nb (V) and Ta (V), preferably Ti (IV), Zr (IV), Sn (IV), Nb (V) and Ta (V); and
z equals to the oxidation state of metal; wherein
the solvent comprises at least one ether group and one alcohol group;
the ratio of moles of water to total moles of Me and Me' is in the range 3:1 to 5:1, more preferably 3.2:1 to 4.5:1, especially 3.5:1 to 4.5:1;
the ratio of moles of HCl to the moles of titanium is in the range 1:1 to 0.3:1, preferably 0.8:1 to 0.35:1, especially 0.7:1 to 0.4:1.

8. The coating composition according to any of claims 1 to 7, comprising
i) 3 to 50 % by weight of the single or mixed metal oxide nanoparticles,
ii) 0.15 to 10 % by weight of the one or more monomers having a triazine ring and at least three thiol groups (-SH) at the terminal end (the first monomer),
iii) 0 to 30 % by weight of the one or more monomers having at least two functional groups at the terminal end being capable of reacting with the thiol groups and a spacer group between the at least two functional groups (the second monomer), and
iv) 20 to 96.9 % by weight of the one, or more solvents; based on total weight of component(s) i), ii), iii) and iv).

9. A coating having a refractive index of greater than 1.7, especially of greater than 1.8, very especially of greater than 1.9, obtainable from the coating composition according to any of claims 1 to 8.

10. The coating according to claim 9 having a thickness of from 0.01 to 0.50 micrometer, preferably 0.02 to 0.40 micrometer, more preferably 0.03 to 0.30 micrometer, most preferably 0.04 to 0.25 micrometer after drying and UV curing; or the coating according to claim 9 having a thickness of from 0.10 to 30.0 micrometer, preferably 0.20 to 20.0 micrometer, more preferably 0.30 to 10 micrometer, most preferably 0.50 to 6.0 micrometer after drying and UV curing.

11. A method for forming a coating having a high refractive index on a substrate comprising the steps of:
a) providing a substrate, preferably carrying a surface relief nano- and/or microstructure;
b) applying the coating composition according to any of claims 1 to 8 to the substrate by means of wet coating, or printing;
c) removing the solvent; and
d) exposing the dry coating to actinic radiation, especially UV-light.

12. A security, or decorative element, comprising a substrate, which may contain indicia or other visible features in or on its surface, and on at least part of the said substrate surface, a coating according to claim 9, or 10; or a coating obtained according to the method according to claim 11.

13. A method for forming a surface relief micro- and nanostructure on a substrate comprising the steps of:
a) forming a surface relief micro- and/or nanostructure on a discrete portion of the substrate;
b) depositing the coating composition according to any of claims 1 to 8 on at least a portion of the surface relief micro- and/or nanostructure;
c) removing the solvent; and
d) curing the dry coating by exposing it to actinic radiation, especially UV-light; or
a method for forming a surface relief micro- and/or nanostructure on a substrate comprising the steps of
a') providing a sheet of base material, said sheet having an upper and lower surface;
b') depositing the coating composition according to any of claims 1 to 8 on at least a portion of the upper surface;
c') removing the solvent;
d') forming a surface relief micro- and/or nanostructure on at least a portion of the coating composition;
e') curing the dry coating obtained in step d') by exposing it to actinic radiation, especially UV-light; or
a method for forming a surface relief micro- and/or nanostructure on a substrate comprising the steps of
a") providing a sheet of base material, said sheet having an upper and lower surface;
b") depositing the coating composition according to any of claims 1 to 8 on at least a portion of the upper surface;
c") removing the solvent;
d") forming a surface relief micro- and/or nanostructure on at least a portion of the coating composition, such that the micro- or nanostructure is formed, at least partially, in the base material.
e") curing the dry coating obtained in step d") by exposing it to actinic radiation, especially UV-light.

14. The method according to claim 13, wherein step a) comprises
a1) applying a curable compound to at least a portion of the substrate;
a2) contacting at least a portion of the curable compound with surface relief micro- and nanostructure forming means; and
a3) curing the curable compound.

15. Use of the coating composition according to any of claims 1 to 8 for coating diffractive optical elements (DOEs), holograms, manufacturing of optical waveguides and solar panels, light outcoupling layers for display and lighting devices, high dielectric constant (high-k) gate oxides and interlayer high-k dielectrics, anti-reflection coatings, etch and CMP stop layers, optical thin film filters, optical diffractive gratings and hybrid thin film diffractive grating structures, high refractive index abrasion-resistant coatings, in protection and sealing (OLED), or organic solar cells.

## Patentansprüche

1. Beschichtungszusammensetzung, insbesondere eine UV-vis-härtbare Beschichtungszusammensetzung, umfassend:
i) Einzel- oder Mischmetalloxid-Nanopartikel, wobei der volumengemittelte Durchmesser (Dᵥ50) der Metalloxid-Nanopartikel im Bereich von 1 bis 20 nm liegt,
ii) ein oder mehrere Monomere mit mindestens drei Thiolgruppen (-SH) am terminalen Ende (das erste Monomer),
iii) gegebenenfalls ein oder mehrere Monomere mit mindestens zwei funktionellen Gruppen an dem terminalen Ende, die in der Lage sind, mit den Thiolgruppen zu reagieren, und einer Spacergruppe zwischen den mindestens zwei funktionellen Gruppen (das zweite Monomer),
iv) ein oder mehrere Lösungsmittel.

2. Beschichtungszusammensetzung nach Anspruch 1, wobei das erste Monomer eine Verbindung der Formel 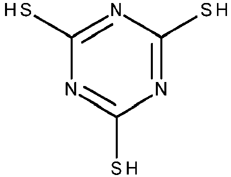 (Trithiocyanursäure) ist.

3. Beschichtungszusammensetzung nach Anspruch 1 oder 2, wobei das zweite Monomer ausgewählt ist aus Bis(4-methacryloylthiophenyl)sulfid, Dipropylenglykoldiacrylat, Tripropylenglykoldiacrylat, Dipropylenglykoldimethacrylat, Tripropylenglykoldimethacrylat, Diethylenglykoldiacrylat, Triethylenglykoldiacrylat, Diethylenglykoldimethacrylat, Triethylenglykoldimethacrylat, Butandioldiacrylat, Butandioldimethacrylat, Hexandioldiacrylat, Hexandioldimethacrylat, Octandioldiacrylat, Octandioldimethacrylat, Nonandioldiacrylat, Nonandioldimethacrylat, Decandioldiacrylat, Decandioldimethacrylat, Cyclohexandioldiacrylat, Cyclohexandioldimethacrylat, Cyclohexandimethanoldiacrylat, Cyclohexandimethanoldimethacrylat, (ethoxyliertes)Neopentylglykoldiacrylat, (propoxyliertes)Neopentylglykoldiacrylat, (ethoxyliertes)Neopentylglykoldimethacrylat, (propoxyliertes)Neopentylglykoldimethacrylat, Trimethylolpropantriacrylat (TMPTA), Trimethylolpropantrimethacrylat (TMPTMA), ethoxylierten Trimethylolpropantriacrylaten, ethoxylierten Trimethylolpropantrimethacrylaten, propoxylierten Trimethylolpropantriacrylaten, propoxylierten Trimethylolpropantrimethacrylaten, ethoxylierten Glycerintriacrylaten, ethoxylierten Glycerintrimethacrylaten, propoxylierten Glycerintriacrylaten, propoxylierten Glycerintrimethacrylaten, Bistrimethylolpropantetraacrylat, Bistrimethylolpropantetramethacrylat, ethoxylierten Bistrimethylolpropantetraacrylaten, propoxylierten Bistrimethylolpropantetraacrylaten, Pentaerythrittetraacrylat, Pentaerythrittetramethacrylat, ethoxylierten Pentaerythrittetraacrylaten, ethoxylierten Pentaerythrittetramethacrylaten, propoxylierten Pentaerythrittetraacrylaten, propoxylierten Pentaerythrittetramethacrylaten, Dipentaerythrithexaacrylat, ethoxylierten Dipentaerythrithexaacrylaten, propoxylierten Dipentaerythrithexaacrylaten und Mischungen davon.

4. Beschichtungszusammensetzung nach einem der Ansprüche 1 bis 3, wobei das Lösungsmittel ausgewählt ist aus C₂-C₄-Alkoholen, insbesondere Ethanol, 1-Propanol und Isopropanol; Ketonen, insbesondere Aceton, 2-Butanon, 2-Pentanon, 3-Pentanon, Cyclopentanon und Cyclohexanon; Etheralkoholen, insbesondere 1-Methoxy-2-propanol; Mischungen davon und deren Mischungen mit Estern, insbesondere Ethylacetat, 1-Propylacetat, Isopropylacetat und Butylacetat.

5. Beschichtungszusammensetzung nach einem der Ansprüche 1 bis 4, wobei die Einzel- oder Mischmetalloxid-Nanopartikel Titandioxid-Nanopartikel sind, die einen volumengemittelten Durchmesser (Dᵥ50) im Bereich von 1 bis 10 nm, vorzugsweise 1 bis 5 nm, aufweisen.

6. Beschichtungszusammensetzung nach einem der Ansprüche 1 bis 5, wobei die Nanopartikel mindestens eine flüchtige oberflächenmodifizierende Verbindung ausgewählt aus Ethanol und Acetylaceton und Mischungen davon umfassen, wobei die Gesamtmenge an flüchtigen oberflächenmodifizierenden Verbindungen im Bereich von 10 bis 50 Gew.-%, insbesondere von 10 bis 40 Gew.-%, ganz besonders von 15 bis 35 Gew.-%, bezogen auf die Menge an Metalloxid-Nanopartikeln, liegt.

7. Beschichtungszusammensetzung nach einem der Ansprüche 1 bis 6, wobei die Einzel- oder Mischmetalloxid-Nanopartikel Titandioxid-Nanopartikel sind und durch ein Verfahren erhalten werden, das die folgenden Schritte umfasst:
a) Herstellen einer Mischung, umfassend ein Metallalkoxid der Formel Ti(OR¹²)₄ (Xa), ein Lösungsmittel, HCl und Wasser, wobei R¹² C₁-C₄-Alkyl, vorzugsweise Methyl, Ethyl, n-Propyl, iso-Propyl und n-Butyl ist;
b1) Erhitzen der Mischung auf eine Temperatur von 80 °C bis 100 °C;
b2) Abtrennen der erhaltenen TiO₂-Nanopartikel aus der Mischung;
b3) Resuspendieren der TiO₂-Nanopartikel in einem C₁-C₄-Alkohol oder einer Mischung von C₁-C₄-Alkoholen;
b4) gegebenenfalls Behandeln der TiO₂-Nanopartikel mit einem oder mehreren β-Diketonen oder einem oder mehreren Salzen davon;
c1) Behandeln der TiO₂-Nanopartikel mit einer Base;
c2) gegebenenfalls Behandeln der TiO₂-Nanopartikel mit einem oder mehreren β-Diketonen oder einem oder mehreren Salzen davon;
c3) gegebenenfalls Behandeln der TiO₂-Nanopartikel mit einer Verbindung der Formel Me' (OR^{20'})_{z} (VII) oder Mischungen davon; und
c4) Filtrieren der Mischung, um die Dispersion von TiO₂-Nanopartikeln zu erhalten, wobei
R^{20'} eine C₁-C₈-Alkylgruppe, vorzugsweise eine C₁-C₄-Alkylgruppe ist;
Me' ausgewählt ist aus Zn(II), In(III), Sc(III), Y(III), La(III), Ce (IV), Ti(III), Ti (IV), Zr(IV), Hf (IV), Sn(IV), V(IV), Nb(V) und Ta(V), vorzugsweise Ti(IV), Zr(IV), Sn(IV), Nb(V) und Ta(V); und
z gleich der Oxidationsstufe des Metalls ist; wobei
das Lösungsmittel mindestens eine Ethergruppe und eine Alkoholgruppe umfasst;
das Verhältnis von Molen Wasser zu den Gesamtmolen von Me und Me' im Bereich von 3:1 bis 5:1, besonders bevorzugt 3,2:1 bis 4,5:1, insbesondere 3,5:1 bis 4,5:1 liegt;
das Verhältnis von Molen HCl zu den Molen Titan im Bereich von 1:1 bis 0,3:1, vorzugsweise 0,8:1 bis 0,35:1, insbesondere 0,7:1 bis 0,4:1 liegt.

8. Beschichtungszusammensetzung nach einem der Ansprüche 1 bis 7, umfassend:
i) 3 bis 50 Gew.-% der Einzel- oder Mischmetalloxid-Nanopartikel,
ii) 0,15 bis 10 Gew.-% des einen oder der mehreren Monomere mit einem Triazinring und mindestens drei Thiolgruppen (-SH) am terminalen Ende (das erste Monomer),
iii) 0 bis 30 Gew.-% des einen oder der mehreren Monomere mit mindestens zwei funktionellen Gruppen an dem terminalen Ende, die in der Lage sind, mit den Thiolgruppen zu reagieren, und einer Spacergruppe zwischen den mindestens zwei funktionellen Gruppen (das zweite Monomer), und
iv) 20 bis 96,9 Gew.-% des einen oder der mehreren Lösungsmittel, bezogen auf das Gesamtgewicht der Komponenten i), ii), iii) und iv).

9. Beschichtung mit einem Brechungsindex größer als 1,7, insbesondere größer als 1,8, ganz besonders größer als 1,9, erhältlich aus der Beschichtungszusammensetzung nach einem der Ansprüche 1 bis 8.

10. Beschichtung nach Anspruch 9 mit einer Dicke von 0,01 bis 0,50 Mikrometer, bevorzugt 0,02 bis 0,40 Mikrometer, bevorzugter 0,03 bis 0,30 Mikrometer, am meisten bevorzugt 0,04 bis 0,25 Mikrometer nach dem Trocknen und UV-Härten; oder Beschichtung nach Anspruch 9 mit einer Dicke von 0,10 bis 30,0 Mikrometer, bevorzugt 0,20 bis 20,0 Mikrometer, bevorzugter 0,30 bis 10 Mikrometer, am meisten bevorzugt 0,50 bis 6,0 Mikrometer nach dem Trocknen und UV-Härten.

11. Verfahren zum Bilden einer Beschichtung mit einem hohen Brechungsindex auf einem Substrat, umfassend die Schritte:
a) Bereitstellen eines Substrats, das vorzugsweise eine Oberflächenrelief-Nano- und/oder Mikrostruktur trägt;
b) Aufbringen der Beschichtungszusammensetzung nach einem der Ansprüche 1 bis 8 auf das Substrat mittels Nassbeschichten oder Drucken;
c) Entfernen des Lösungsmittels; und
d) Aussetzen der trockenen Beschichtung aktinischer Strahlung, insbesondere UV-Licht.

12. Sicherheits- oder Dekorelement, umfassend ein Substrat, das Zeichen oder andere sichtbare Merkmale in oder auf seiner Oberfläche enthalten kann, und auf zumindest einem Teil der Substratoberfläche eine Beschichtung nach Anspruch 9 oder 10; oder eine Beschichtung, die gemäß dem Verfahren nach Anspruch 11 erhalten wird.

13. Verfahren zum Bilden einer Oberflächenrelief-Mikro- und Nanostruktur auf einem Substrat, umfassend die Schritte:
a) Bilden einer Oberflächenrelief-Mikro- und/oder Nanostruktur auf einem diskreten Teil des Substrats;
b) Abscheiden der Beschichtungszusammensetzung nach einem der Ansprüche 1 bis 8 auf mindestens einem Teil der Oberflächenrelief-Mikro- und/oder Nanostruktur;
c) Entfernen des Lösungsmittels; und
d) Härten der trockenen Beschichtung, indem sie aktinischer Strahlung, insbesondere UV-Licht, ausgesetzt wird; oder
Verfahren zum Bilden einer Oberflächenrelief-Mikro- und/oder Nanostruktur auf einem Substrat, umfassend die Schritte:
a') Bereitstellen einer Lage aus Basismaterial, wobei die Lage eine obere und eine untere Oberfläche aufweist;
b') Abscheiden der Beschichtungszusammensetzung nach einem der Ansprüche 1 bis 8 auf mindestens einem Teil der oberen Oberfläche;
c') Entfernen des Lösungsmittels;
d') Bilden einer Oberflächenrelief-Mikro- und/oder Nanostruktur auf mindestens einem Teil der Beschichtungszusammensetzung;
e') Härten der in Schritt d') erhaltenen trockenen Beschichtung, indem sie aktinischer Strahlung, insbesondere UV-Licht, ausgesetzt wird; oder
Verfahren zum Bilden einer Oberflächenrelief-Mikro- und/oder Nanostruktur auf einem Substrat, umfassend die Schritte:
a") Bereitstellen einer Lage aus Basismaterial, wobei die Lage eine obere und eine untere Oberfläche aufweist;
b") Abscheiden der Beschichtungszusammensetzung nach einem der Ansprüche 1 bis 8 auf mindestens einem Teil der oberen Oberfläche;
c") Entfernen des Lösungsmittels;
d") Bilden einer Oberflächenrelief-Mikro- und/oder Nanostruktur auf mindestens einem Teil der Beschichtungszusammensetzung, so dass die Mikro- oder Nanostruktur zumindest teilweise in dem Basismaterial gebildet wird.
e") Härten der in Schritt d") erhaltenen Trockenbeschichtung, indem sie aktinischer Strahlung, insbesondere UV-Licht, ausgesetzt wird.

14. Verfahren nach Anspruch 13, wobei Schritt a) umfasst:
a1) Aufbringen einer härtbaren Verbindung auf mindestens einen Teil des Substrats;
a2) Inkontaktbringen mindestens eines Teils der härtbaren Verbindung mit Oberflächenrelief-Mikro- und Nanostrukturbildungsmitteln; und
a3) Härten der härtbaren Verbindung.

15. Verwendung der Beschichtungszusammensetzung nach einem der Ansprüche 1 bis 8 zum Beschichten von diffraktiven optischen Elementen (DOEs), Hologrammen, Fertigung von Lichtwellenleitern und Solarpaneelen, Lichtauskoppelschichten für Anzeige- und Beleuchtungsvorrichtungen, Gateoxiden mit hoher Dielektrizitätskonstante (High-k) und Zwischenschicht-High-k-Dielektrika, Antireflexionsbeschichtungen, Ätz- und CMP-Stoppschichten, optischen Dünnfilmfiltern, optischen diffraktiven Gittern und Hybrid-Dünnfilm-Diffraktivgitterstrukturen, hochbrechenden abriebfesten Beschichtungen, in Schutz und Abdichtung (OLED), oder organischen Zellen.

## Revendications

1. Composition de revêtement, en particulier composition de revêtement durcissable par des UV, comprenant
i) des nanoparticules d'oxyde métallique simple ou mixte, dans laquelle le diamètre moyen en volume (Dᵥ50) des nanoparticules d'oxyde métallique est dans la plage de 1 à 20 nm,
ii) un ou plusieurs monomères présentant au moins trois groupes thiol (-SH) au niveau de l'extrémité terminale (le premier monomère),
iii) éventuellement un ou plusieurs monomères possédant au moins deux groupes fonctionnels au niveau de l'extrémité terminale qui sont capables de réagir avec les groupes thiols et un groupe espaceur entre les au moins deux groupes fonctionnels (le second monomère),
iv) un, ou plusieurs solvants.

2. Composition de revêtement selon la revendication 1, dans laquelle le premier monomère est un composé de formule 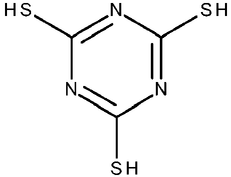 (acide trithiocyanurique).

3. Composition de revêtement selon la revendication 1 ou 2, dans laquelle le second monomère est choisi parmi bis(4-méthacryloylthiophényl)sulfure, diacrylate de dipropylène glycol, diacrylate de tripropylène glycol, diméthacrylate de dipropylène glycol, diméthacrylate de tripropylène glycol, diacrylate de diéthylène glycol, diacrylate de triéthylène glycol, diméthacrylate de diéthylène glycol, diméthacrylate de triéthylène glycol, diacrylate de butanediol, diméthacrylate de butanediol, diacrylate d'hexanediol, diméthacrylate d'hexanediol, diacrylate d'octanediol, diméthacrylate d'octanediol, diacrylate de nonanediol, diméthacrylate de nonanediol, diacrylate de décanediol, diméthacrylate de décanediol, diacrylate de cyclohexanediol, diméthacrylate de cyclohexanediol, diacrylate de cyclohexanediméthanol, diméthacrylate de cyclohexanediméthanol, diacrylate de néopentyl glycol (éthoxylé), diacrylate de néopentyl glycol (propoxylé), diméthacrylate de néopentylglycol (éthoxylé), diméthacrylate de néopentylglycol (propoxylé), triacrylate de triméthylolpropane (TMPTA), triméthacrylate de triméthylolpropane (TMPTMA), triacrylates de triméthylolpropane éthoxylés, triméthacrylates de triméthylolpropane éthoxylés, triacrylates de triméthylolpropane propoxylés, triméthacrylates de triméthylolpropane propoxylés, triacrylates de glycérol éthoxylés, triméthacrylates de glycérol éthoxylés, triacrylates de glycérol propoxylés, triméthacrylates de glycérol propoxylés, tétraacrylate de bistriméthylolpropane, tétraméthacrylate de bistriméthylolpropane, tétraacrylates de bistriméthylolpropane éthoxylés, tétraacrylates de bistriméthylolpropane propoxylés, tétraacrylate de pentaérythritol, tétraméthacrylate de pentaérythritol, tétraacrylates de pentaérythritol éthoxylés, tétraméthacrylates de pentaérythritol éthoxylés, tétraacrylates de pentaérythritol propoxylés, tétraméthacrylates de pentaérythritol propoxylés, hexaacrylate de dipentaérythritol, hexaacrylates de dipentaérythritol éthoxylés, hexaacrylates de dipentaérythritol propoxylés et leurs mélanges.

4. Composition de revêtement selon l'une quelconque des revendications 1 à 3, dans laquelle le solvant est choisi parmi les alcools en C₂-C₄, notamment éthanol, 1-propanol et isopropanol ; cétones, notamment acétone, 2-butanone, 2-pentanone, 3-pentanone, cyclopentanone et cyclohexanone ; éthers alcools, notamment 1-méthoxy-2-propanol ; leurs mélanges et leurs mélanges avec des esters, notamment acétate d'éthyle, acétate de 1-propyle, acétate d'isopropyle et acétate de butyle.

5. Composition de revêtement selon l'une quelconque des revendications 1 à 4, dans laquelle les nanoparticules d'oxyde métallique simple ou mixte sont des nanoparticules de dioxyde de titane, qui ont un diamètre moyen en volume (Dᵥ50) dans la plage de 1 à 10 nm, de préférence de 1 à 5 nm.

6. Composition de revêtement selon l'une quelconque des revendications 1 à 5, dans laquelle les nanoparticules comprennent au moins un composé modificateur de surface volatil choisi parmi l'éthanol et l'acétylacétone et leurs mélanges, dans laquelle la quantité totale de composés modificateurs de surface volatils est dans la plage de 10 à 50 % en poids, en particulier de 10 à 40 % en poids, tout particulièrement de 15 à 35 % en poids par rapport à la quantité de nanoparticules d'oxyde métallique.

7. Composition de revêtement selon l'une quelconque des revendications 1 à 6, dans laquelle les nanoparticules d'oxyde métallique simple ou mixte sont des nanoparticules de dioxyde de titane et sont obtenues par un procédé comprenant les étapes suivantes :
a) préparation d'un mélange, comprenant un alcoxyde métallique de formule Ti(OR¹²)₄ (Xa), un solvant, HCl et de l'eau, où R¹² est C₁-C₄alkyle, de préférence méthyle, éthyle, n-propyle, iso-propyle et n-butyle ;
b1) chauffage du mélange jusqu'à une température de 80 °C à 100 °C ;
b2) séparation des nanoparticules TiO₂ obtenues du mélange ;
b3) remise en suspension des nanoparticules TiO₂ dans un alcool en C₁-C₄, ou un mélange d'alcools en C₁-C₄ ;
b4) éventuellement, traitement des nanoparticules TiO₂ par une ou plusieurs β-dicétone(s), ou son/leurs sel(s) ;
c1) traitement des nanoparticules de TiO₂ par une base ;
c2) éventuellement traitement des nanoparticules TiO₂ par une ou plusieurs β-dicétone(s), ou son/leurs sel(s);
c3) éventuellement traitement des nanoparticules de TiO₂ par un composé de formule Me' (OR^{20'})_{z} (VII), ou leurs mélanges ; et
c4) filtration du mélange pour obtenir la dispersion de nanoparticules TiO₂, dans laquelle
R^{20'} est un groupe alkyle en C₁-C₈, de préférence un groupe alkyle en C₁-C₄ ;
Me' est choisi parmi Zn (II), In (III), Sc (III), Y (III), La (III), Ce (IV), Ti (III), Ti (IV), Zr (IV), Hf (IV), Sn (IV), V (IV), Nb (V) et Ta (V), de préférence Ti (IV), Zr (IV), Sn (IV), Nb (V) et Ta (V) ; et
z est égal à l'état d'oxydation du métal ; dans laquelle le solvant comprend au moins un groupe éther et un groupe alcool ;
le rapport de moles d'eau sur moles totales de Me et Me' est dans la plage de 3:1 à 5:1, plus préférablement de 3,2:1 à 4,5:1, en particulier de 3,5:1 à 4,5:1 ;
le rapport des moles de HCl sur moles de titane est dans la plage de 1:1 à 0,3:1, de préférence de 0,8:1 à 0,35:1, en particulier de 0,7:1 à 0,4:1.

8. Composition de revêtement selon l'une quelconque des revendications 1 à 7, comprenant
i) 3 à 50 % en poids des nanoparticules d'oxyde métallique simple ou mixte,
ii) 0,15 à 10 % en poids du ou des monomères présentant un cycle triazine et au moins trois groupes thiol (-SH) au niveau de l'extrémité terminale (le premier monomère),
iii) 0 à 30 % en poids des un ou plusieurs monomères possédant au moins deux groupes fonctionnels au niveau de l'extrémité terminale qui sont susceptibles de réagir avec les groupes thiols et un groupe espaceur entre les au moins deux groupes fonctionnels (le second monomère), et
iv) 20 à 96,9 % en poids du ou des solvants ; sur la base du poids total du ou des composants i), ii), iii) et iv).

9. Revêtement ayant un indice de réfraction supérieur à 1,7, en particulier supérieur à 1,8, tout particulièrement supérieur à 1,9, pouvant être obtenu à partir de la composition de revêtement selon l'une quelconque des revendications 1 à 8.

10. Revêtement selon la revendication 9, ayant une épaisseur de 0,01 à 0,50 micromètre, de préférence de 0,02 à 0,40 micromètre, plus préférablement de 0,03 à 0,30 micromètre, le plus préférablement de 0,04 à 0,25 micromètre après séchage et durcissement par des UV ; ou revêtement selon la revendication 9 ayant une épaisseur de 0,10 à 30,0 micromètres, de préférence de 0,20 à 20,0 micromètres, plus préférablement de 0,30 à 10 micromètres, le plus préférablement de 0,50 à 6,0 micromètres après séchage et durcissement par des UV.

11. Procédé de formation d'un revêtement ayant un indice de réfraction élevé sur un substrat comprenant les étapes de :
a) fourniture d'un substrat, de préférence portant une nanostructure et/ou une microstructure à relief de surface ;
b) application de la composition de revêtement selon l'une quelconque des revendications 1 à 8 sur le substrat au moyen d'un revêtement humide, ou d'une impression ;
c) élimination du solvant ; et
d) exposition du revêtement sec à un rayonnement actinique, notamment à de la lumière UV.

12. Elément de sécurité, ou décoratif, comprenant un substrat, qui peut contenir des signes distinctifs ou d'autres caractéristiques visibles dans ou sur sa surface, et sur au moins une partie de ladite surface du substrat, un revêtement selon la revendication 9, ou 10 ; ou un revêtement obtenu selon le procédé selon la revendication 11.

13. Procédé de formation d'une microstructure et nanostructure à relief de surface sur un substrat comprenant les étapes de :
a) formation d'une microstructure et/ou nanostructure à relief de surface sur une partie discrète du substrat ;
b) dépôt de la composition de revêtement selon l'une quelconque des revendications 1 à 8 sur au moins une partie de la microstructure et/ou nanostructure à relief de surface ;
c) élimination du solvant ; et
d) durcissement du revêtement sec par exposition de celui-ci à un rayonnement actinique, notamment à de la lumière UV ; ou
procédé de formation d'une microstructure et/ou nanostructure à relief de surface sur un substrat, comprenant les étapes de
a') fourniture d'une feuille de matériau de base, ladite feuille présentant une surface supérieure et inférieure ;
b') dépôt de la composition de revêtement selon l'une quelconque des revendications 1 à 8 sur au moins une partie de la surface supérieure ;
c') élimination du solvant ;
d') formation d'une microstructure et/ou nanostructure à relief de surface sur au moins une partie de la composition de revêtement ;
e') durcissement du revêtement sec obtenu à l'étape d') par exposition de celui-ci à un rayonnement actinique, notamment à de la lumière UV ; ou
procédé de formation d'une microstructure et/ou nanostructure à relief de surface sur un substrat, comprenant les étapes de
a") fourniture d'une feuille de matériau de base, ladite feuille présentant une surface supérieure et inférieure ;
b") dépôt de la composition de revêtement selon l'une quelconque des revendications 1 à 8 sur au moins une partie de la surface supérieure ;
c") élimination du solvant ;
d") formation d'une microstructure et/ou nanostructure à relief de surface sur au moins une partie de la composition de revêtement, de sorte que la microstructure ou nanostructure soit formée, au moins partiellement, dans le matériau de base ;
e") durcissement du revêtement sec obtenu à l'étape d") par exposition de celui-ci à un rayonnement actinique, notamment à de la lumière UV.

14. Procédé selon la revendication 13, dans lequel l'étape a) comprend
a1) l'application d'un composé durcissable sur au moins une partie du substrat ;
a2) la mise en contact d'au moins une partie du composé durcissable avec des moyens de formation de microstructure et nanostructure à relief de surface ; et
a3) le durcissement du composé durcissable.

15. Utilisation de la composition de revêtement selon l'une quelconque des revendications 1 à 8 pour revêtir des éléments optiques diffractants (DOE), des hologrammes, la fabrication de guides d'ondes optiques et de panneaux solaires, des couches de découplage de lumière pour dispositifs d'affichage et d'éclairage, des oxydes de grille à constante diélectrique élevée (k élevé) et des diélectriques intercouches à k élevé, des revêtements anti-reflet, des couches d'arrêt de gravure et CMP, des filtres à film mince optiques, des réseaux de diffraction optiques et structures de réseaux de diffraction hybrides en film mince, des revêtements résistants à l'abrasion à indice de réfraction élevé, dans la protection et le scellement (OLED), ou des cellules solaires organiques.
